# EUROPEAN PATENT APPLICATION

(11) **EP 4 841 955 A1**
(43) Date of publication of application: **18.11.2026**
(21) Application number: 26177115.8
(22) Date of filing: 07.05.2026
(51) Int. Cl.: H04L 47/125, H04L 43/0864, H04L 47/283, H04L 47/625

(54) **DYNAMIC LOAD BALANCING OF NETWORK TRAFFIC BASED ON ROUND TRIP TIME MEASUREMENTS**

(30) Priority: 12.05.2025 US 202519205868
(71) Applicant: Avago Technologies International Sales Pte. Limited, Singapore 768923 (SG)
(72) Inventor: Barba, Alexandru, Andover, 01810 (US); Alexander, Cedell Adam Jr., Andover, 01810 (US); Schramm, Karen Marie, Andover, 01810 (US)
(74) Representative: Dilg, Haeusler, Schindelmann Patentanwaltsgesellschaft mbH

(57) **Abstract**

Methods, systems, and devices for dynamic load balancing of network traffic based on round trip time measurements are described. In some implementations, the method may include measuring round trip time for data packets transmitted over a plurality of queue pairs in a network. The method may include computing scheduler weights for the plurality of queue pairs based on the measured round trip time, where the scheduler weights may indicate levels of network congestion. The method may include adjusting sub-chunk sizes of data packets to be transmitted over the plurality of queue pairs based on the computed scheduler weights. The method may include transmitting the adjusted sub-chunk sizes over the plurality of queue pairs according to the computed scheduler weights.

## Description

### FIELD OF TECHNOLOGY

The present disclosure relates generally to database systems and data processing, and more specifically to dynamic load balancing of network traffic based on round trip time measurements.

### BACKGROUND

Remote Direct Memory Access (RDMA) is a networking technology that enables high-speed data transfer between memory regions of different computing systems with minimal CPU involvement. RDMA may be used in distributed computing systems, particularly for artificial intelligence and machine learning workloads, due to its ability to reduce latency and increase throughput. RDMA implementations, such as RDMA over Converged Ethernet, may rely on Queue Pairs to establish point-to-point communication channels between endpoints. Equal-Cost Multi-Path routing may be employed in data center networks to distribute traffic across multiple paths.

### SUMMARY

The described techniques relate to improved methods, systems, devices, and apparatuses that support techniques for dynamic load balancing of network traffic based on round trip time measurements. Some implementations provide a method for dynamically scheduling Remote Direct Memory Access traffic across Queue Pairs based on network congestion, utilizing Round Trip Time measurements to compute scheduler weights. These weights may be derived from Round Trip Time estimates, which may be filtered using an estimator function to provide stable metrics for congestion evaluation. The scheduler weights may then be used to adjust the sub-chunk sizes of data transmitted across Queue Pairs, enabling a weighted distribution of traffic that prioritizes less congested paths. This approach may enhance load balancing efficiency by dynamically adapting to real-time network conditions.

Some implementations may support multiple load balancing mechanisms, including striping and round-robin, and may introduce an enhanced stripe load balancing scheduler that enforces a minimum sub-chunk size threshold. This threshold may ensure that sub-chunks are not divided excessively, maintaining performance efficiency. Additionally, some implementations may incorporate a fallback mechanism to weighted round-robin scheduling for cases where messages are too small to be striped across multiple Queue Pairs. By dynamically adjusting traffic distribution based on congestion metrics, some implementations may reduce latency, improve throughput, and optimize the utilization of available network paths, addressing the limitations of existing load balancing methods.

A method for dynamic load balancing of network traffic based on RTT measurements is described. The method may include measuring RTT for data packets transmitted over a plurality of QPs in a network. The method may include computing scheduler weights for the plurality of QPs based on the measured RTT, the scheduler weights indicating levels of network congestion. The method may include adjusting sub-chunk sizes of data packets to be transmitted over the plurality of QPs based on the computed scheduler weights. The method may include transmitting the adjusted sub-chunk sizes over the plurality of QPs according to the computed scheduler weights.

A system configured for dynamic load balancing of network traffic based on round trip time measurements is described. The system may include a processor. The system may include memory coupled with the processor. The system may include instructions stored in the memory and executable by the processor to cause the system to measure round trip time (RTT) for data packets transmitted over a plurality of queue pairs (QPs) in a network. The system may include instructions to compute scheduler weights for the plurality of QPs based on the measured RTT, the scheduler weights indicating levels of network congestion. The system may include instructions to adjust sub-chunk sizes of data packets to be transmitted over the plurality of QPs based on the computed scheduler weights. The system may include instructions to transmit the adjusted sub-chunk sizes over the plurality of QPs according to the computed scheduler weights.

Another system for dynamic load balancing of network traffic based on round trip time measurements is described. The system may include means for measuring RTT for data packets transmitted over a plurality of QPs in a network. The system may include means for computing scheduler weights for the plurality of QPs based on the measured RTT, the scheduler weights indicating levels of network congestion. The system may include means for adjusting sub-chunk sizes of data packets to be transmitted over the plurality of QPs based on the computed scheduler weights. The system may include means for transmitting the adjusted sub-chunk sizes over the plurality of QPs according to the computed scheduler weights.

A non-transitory computer-readable medium storing code for wireless communication at a UE is described. The code may include instructions executable by a processor to perform dynamic load balancing of network traffic based on round trip time (RTT) measurements. The code may include instructions executable by a processor to measure RTT for data packets transmitted over a plurality of queue pairs (QPs) in a network. The code may include instructions executable by a processor to compute scheduler weights for the plurality of QPs based on the measured RTT, the scheduler weights indicating levels of network congestion. The code may include instructions executable by a processor to adjust sub-chunk sizes of data packets to be transmitted over the plurality of QPs based on the computed scheduler weights. The code may include instructions executable by a processor to transmit the adjusted sub-chunk sizes over the plurality of QPs according to the computed scheduler weights.

Some examples of the method, systems, and non-transitory computer-readable medium described herein may further include operations, features, means, or instructions for resetting the history of the average round trip time measurements at a configured interval to increase responsiveness to changing network conditions.

Some examples of the method, systems, and non-transitory computer-readable medium described herein may further include operations, features, means, or instructions for selecting a metric for the round trip time measurements from a group consisting of raw round trip time, round trip time minus transmission time of message payload, and round trip time minus transmission time of message payload and minimum latency for the network.

Some examples of the method, systems, and non-transitory computer-readable medium described herein may further include operations, features, means, or instructions for applying an estimator function to the round trip time measurements to filter instantaneous metric values and form a more stable estimate of network congestion.

Some examples of the method, systems, and non-transitory computer-readable medium described herein may further include operations, features, means, or instructions for updating the scheduler weights at a configured update interval to reflect current network conditions.

Some examples of the method, systems, and non-transitory computer-readable medium described herein may further include operations, features, means, or instructions for transmitting control-plane messages over the queue pair experiencing the least network congestion based on the computed scheduler weights.

In some examples of the method, systems, and non-transitory computer-readable medium described herein, the sub-chunk sizes may be adjusted to avoid exceeding a threshold that constrains the minimum sub-chunk size.

In some examples of the method, systems, and non-transitory computer-readable medium described herein, wherein the scheduler weight for a QP corresponds to a percentage of network traffic to be sent over that QP.

In some examples of the method, systems, and non-transitory computer-readable medium described herein, the round trip time measurements may be made by network interface card hardware to reduce measurement jitter.

In some examples of the method, systems, and non-transitory computer-readable medium described herein, the estimator function may be selected from a group consisting of average, weighted average, and TCP estimator.

### BRIEF DESCRIPTION OF THE DRAWINGS

FIG. 1 illustrates an example of a system for data processing that supports dynamic load balancing of network traffic based on round trip time measurements in accordance with aspects of the present disclosure.
FIG. 2 shows network test configuration which supports techniques for dynamic load balancing of network traffic based on round trip time measurements in accordance with various aspects of the present disclosure.
FIG. 3 shows a graph illustrating performance benchmark measurements in accordance with various aspects of the present disclosure.
FIG. 4 shows QP scheduler operation which supports techniques for dynamic load balancing of network traffic based on round trip time measurements in accordance with various aspects of the present disclosure.
FIG. 5 shows scheduler operation illustration which supports techniques for dynamic load balancing of network traffic based on round trip time measurements in accordance with various aspects of the present disclosure.
FIG. 6 shows load balance scheduler which supports techniques for dynamic load balancing of network traffic based on round trip time measurements in accordance with various aspects of the present disclosure.
FIG. 7 illustrates an example of a process flow that supports dynamic load balancing of network traffic based on round trip time measurements in accordance with various aspects of the present disclosure.
FIG. 8 shows a block diagram of an apparatus that supports dynamic load balancing of network traffic based on round trip time measurements in accordance with various aspects of the present disclosure.
FIG. 9 shows a block diagram of a dynamic load-balancing component that supports dynamic load balancing of network traffic based on round trip time measurements in accordance with various aspects of the present disclosure.
FIG. 10 shows a diagram of a system including a device that supports dynamic load balancing of network traffic based on round trip time measurements in accordance with various aspects of the present disclosure.
FIG. 11 shows a flowchart illustrating methods that support dynamic load balancing of network traffic based on round trip time measurements in accordance with various aspects of the present disclosure.
Fig. 12 illustrates a QP scheduler selection flowchart in accordance with various aspects of the present disclosure.

### DETAILED DESCRIPTION

Methods, systems, devices, and apparatuses that support techniques for dynamic load balancing of network traffic based on round trip time measurements are disclosed. In some examples, efficient load balancing of Remote Direct Memory Access (RDMA) traffic may be essential for optimizing network performance in distributed computing environments, particularly for artificial intelligence and machine learning workloads. Current methods, such as Equal-Cost Multi-Path routing and multi-Queue Pair strategies implemented by Collective Communication Libraries, may suffer from several limitations. Equal-Cost Multi-Path routing may assign traffic to paths based on static hash calculations, resulting in uneven load distribution and congestion when multiple large data flows hash to the same path. Multi-Queue Pair strategies, while offering improvements, may rely on static configurations and lack real-time congestion awareness, making them reactive rather than proactive. These limitations may lead to suboptimal utilization of available network paths, increased latency, and reduced throughput, particularly in large-scale deployments with dynamic network conditions. The absence of mechanisms to dynamically adjust traffic distribution based on real-time network congestion may further exacerbate these challenges, creating bottlenecks that negatively impact overall system performance and scalability.

According to some implementations, a method may utilize Round Trip Time (RTT) measurements to dynamically schedule Remote Direct Memory Access (RDMA) traffic across Queue Pairs (QPs) based on network congestion. This method may involve collecting RTT metrics for each QP to assess network congestion. Various RTT-based metrics may be computed, including the total round trip time, RTT minus the transmission time of the message payload, RTT minus the transmission time of the message payload and minimum network latency, and RTT minus the transmission time of the message payload, minimum network latency, and transmission time of protocol headers.

Estimator functions may be applied to these RTT metrics to filter instantaneous values and produce stable estimates of network congestion. Several types of estimator functions may be used, such as the Average Estimator, which may compute the average of RTT metrics over a period and may reset the history of the average at configurable intervals to improve responsiveness to changing network conditions. The Weighted Average Estimator may combine the current RTT metric with the previous estimate using a weight factor, allowing faster responsiveness to changes. The Transmission Control Protocol (TCP) Estimator may update the estimate using a formula that aggressively reacts to RTT fluctuations.

Scheduler weights may be derived from these RTT estimates to prioritize QPs with lower congestion. The formula for computing scheduler weights may involve inverting the RTT estimate for each QP to calculate a new estimate and normalizing these new estimates by dividing each by the sum of all new estimates. The resulting scheduler weights may determine the proportion of traffic allocated to each QP.

Sub-chunk sizes for transmission may be adjusted based on the scheduler weights. QPs with higher weights, indicating lower congestion, may be allocated larger sub-chunk sizes. These sub-chunk sizes may be rounded down to the nearest multiple of 128 bytes, with the remainder allocated to the last QP. Sub-chunk sizes can refer to partitioning data packets, messages, or information units into smaller, variably-sized components for transmission across communication channels (e.g., queue pairs). The approach involves determining appropriate dimensions for these sub-chunks based on various factors which may include but are not limited to current network conditions, processing capabilities of sending and receiving entities, queue pair characteristics, congestion levels, priority considerations, and application-specific requirements. The implementation enables adaptive segmentation of larger data units, allowing for optimized utilization of available bandwidth, improved load distribution across multiple queue pairs, enhanced parallelism in data transmission, and potentially reduced latency in overall communication processes. The technique may incorporate mechanisms for dynamically adjusting sub-chunk dimensions in response to changing system parameters, performance metrics, or quality of service objectives. Sub-chunk sizing strategies are not confined to any particular communication protocol, hardware configuration, or software framework, and may be implemented through various algorithmic approaches that consider the interrelationship between data characteristics, transmission medium properties, and receiver processing capabilities to achieve efficient and reliable data transfer.

The scheduler weights may be refreshed periodically based on a configurable update interval. This refresh interval may be adjusted to balance responsiveness to network changes and stability of the weights. Shorter intervals may allow faster adaptation to network conditions, while longer intervals may provide more stable averages. In some implementations, the scheduler weights may be refreshed in response to significant changes in network conditions. For example, if a change in network conditions is greater than a predetermined threshold, the estimator history may be cleared and/or the scheduler weights may be refreshed to expeditiously account for the significant change. In some implementations, the threshold may be expressed as percentage of the delta between a sampled metric and the estimator. More specifically, the threshold may be triggered when ((absolute value(estimator - metric) / estimator) * 100) > configured threshold percentage.

Control-plane messages, such as Clear To Send (CTS) signals, may be transmitted on the QP experiencing the least congestion. This may reduce latency for control-plane operations, improving overall performance of collective communication.

An enhanced stripe load balancing method may enforce a sub-chunk threshold to constrain the minimum sub-chunk size, ensuring efficient transmission. The number of QPs used for transmission may be determined by the sub-chunk threshold and the total chunk size. If the chunk size is too small to utilize all available QPs, only a subset of QPs may be used.

For cases where messages are too small to be striped across multiple QPs, a weighted round robin scheduler may be used. The weights derived from RTT estimates may determine the percentage of transmit requests allocated to each QP. Entire messages may be sent over individual QPs, with the distribution of messages based on the computed weights.

A decision tree may be used to select the appropriate scheduler based on the number of QPs used. The Stripe Load Balance Scheduler may be selected when all available QPs are used. The Enhanced Stripe Load Balance Scheduler may be selected when fewer QPs are used than available, but more than one. The Weighted Round Robin Load Balance Scheduler may be selected when only one QP is used.

Testing and performance benchmarking may demonstrate the effectiveness of this method. For example, metrics and weights may be updated at intervals of 500 milliseconds or faster, with a history reset interval of 10 seconds or faster. RTT measurements made in user-space may experience significant jitter, but the average estimator function may provide stable results despite this jitter, ensuring reliable scheduler weights.

This method may be designed to adapt to varying network conditions by dynamically adjusting weights and sub-chunk sizes. Configurable parameters, such as the history reset interval and weight update interval, may allow fine-tuning for specific deployments. The method may be applicable to systems of varying scales, from small deployments with tens of nodes to large data centers with thousands of nodes. Configurable parameters may be adjusted to optimize performance for different scales and workloads.

The method may be implemented within collective communication libraries to enhance their load balancing capabilities. It may complement existing load balancing mechanisms, such as round robin and striping, by introducing congestion-aware scheduling. This method may address limitations of traditional Equal-Cost Multi-Path (ECMP) and QP load balancing by dynamically redistributing traffic based on congestion. It may be particularly effective for large data transfers in AI/ML workloads, reducing bottlenecks and improving overall network utilization.

When messages are too small to be striped across multiple QPs, the method may fall back to weighted round robin scheduling. This may ensure efficient load balancing even for small message sizes. The method may minimize overhead associated with transmitting sub-chunks by enforcing a minimum sub-chunk size threshold, reducing completion processing time and improving overall performance.

The method may be compatible with RDMA protocols, including those implemented over Ethernet infrastructure. It may leverage existing QP mechanisms while introducing dynamic scheduling based on RTT measurements. By dynamically adjusting traffic distribution based on congestion, the method may ensure more balanced utilization of available network paths, reducing the likelihood of congestion on individual paths and improving overall throughput.

The method may introduce congestion awareness into QP scheduling, addressing limitations of static ECMP routing. It may dynamically react to network conditions, redistributing traffic to less congested paths. The method may be designed to operate in multi-tier Ethernet fabrics, including top-of-rack and spine switches, accounting for the complexities of such network architectures in its scheduling decisions.

The method may enhance the performance of collective operations commonly used in AI/ML workloads. By reducing network latency and improving throughput, it may accelerate distributed training and other data-intensive tasks. The method may include multiple configurable parameters, such as the history reset interval for the average estimator, scheduler weight update interval, and sub-chunk size threshold, allowing customization for specific network conditions and workload requirements.

By dynamically redistributing traffic based on RTT measurements, the method may mitigate hash collision problems associated with ECMP, ensuring more even load distribution across available network paths. The method may proactively redistribute traffic based on RTT estimates, avoiding congestion before it impacts performance. This may contrast with reactive approaches that address congestion only after it occurs.

The scheduler weights computed by the method may be directly used by the data plane to determine sub-chunk sizes for transmission, ensuring efficient and responsive load balancing. The method may be compatible with RDMA's reliable connection mode, which guarantees ordered packet delivery, maintaining the integrity of RDMA communication while introducing dynamic scheduling.

The method may reduce disruption caused by network reconvergence events, such as link failures or topology changes, by dynamically adjusting traffic distribution, ensuring continued performance during such events. By addressing polarization effects in ECMP routing, where certain paths become overutilized while others remain underutilized, the method may ensure more balanced utilization of network paths.

The method may be designed to scale efficiently in large deployments with hundreds or thousands of QPs, introducing mechanisms to manage the complexity of such deployments while maintaining performance. It may enhance message striping by dynamically adjusting sub-chunk sizes based on congestion, improving the efficiency of large message transfers across multiple QPs.

By enforcing a minimum sub-chunk size threshold, the method may reduce completion processing time associated with transmitting sub-chunks, improving overall performance and reducing overhead. The method may adapt to changes in workload communication patterns, ensuring continued efficiency in dynamic environments, making it suitable for AI/ML workloads with varying data transfer requirements.

The method may address the challenges of large data transfers in AI/ML workloads by redistributing traffic based on congestion, reducing bottlenecks and improving overall network performance. It may enhance the performance of collective operations, such as all-to-all communication, by reducing network latency and congestion, accelerating distributed computing tasks and reducing training times for AI/ML models.

Aspects of the subject matter described in this disclosure can be implemented to realize one or more of the following potential advantages. The described techniques may be implemented to support dynamic and congestion-aware scheduling of RDMA traffic, which may enhance the efficiency of data transfers in distributed computing environments. By utilizing RTT measurements, the method may provide a more responsive and adaptive approach to load balancing, potentially reducing network congestion and improving overall throughput. The ability to dynamically adjust scheduler weights and sub-chunk sizes based on real-time network conditions may ensure more balanced utilization of network paths, which may mitigate bottlenecks and enhance the performance of collective operations. The method may also offer configurable parameters that allow fine-tuning for specific network conditions and workloads, making it suitable for a wide range of deployment scales. By addressing the limitations of static ECMP routing, the method may improve the reliability and efficiency of RDMA communication, potentially accelerating data-intensive tasks such as distributed training in AI/ML workloads.

Aspects of the disclosure are initially described in the context of networked computing systems. Aspects of the disclosure are additionally illustrated by and described with reference to example implementations. Aspects of the disclosure are further illustrated by and described with reference to apparatus diagrams, system diagrams, and flowcharts that relate to dynamic load balancing of network traffic based on round trip time measurements.

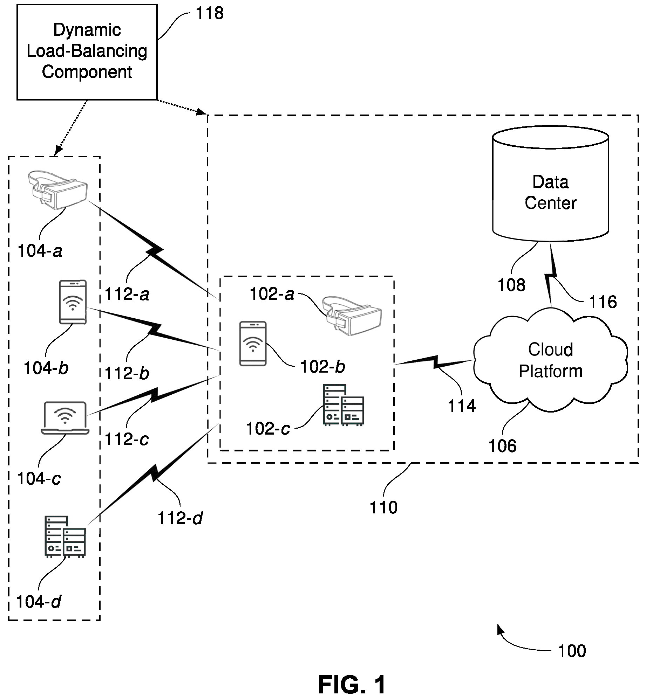

FIG. 1 illustrates an example of a system 100 that supports dynamic load balancing of network traffic based on round trip time measurements in accordance with various aspects of the present disclosure. Dynamic load balancing adaptively distributes computational workloads, data processing tasks, network traffic, or other resource-intensive operations across multiple processing units, servers, nodes, or other computational resources in real-time or near real-time based on continuously monitored system conditions. The technique comprises monitoring the current load, capacity, and/or performance metrics of available resources; implementing algorithms that make allocation decisions based on these metrics; and redistributing workloads accordingly to optimize system performance. The dynamic nature of this process allows for continuous adjustment in response to changing conditions, which may include but are not limited to variations in incoming request volume, changes in resource availability, fluctuations in processing requirements, performance degradation of individual resources, and addition or removal of resources from the resource pool. This approach is not limited to any specific implementation, hardware architecture, software framework, network topology, or application domain, and may be applied across various technical fields where resource allocation optimization is beneficial. The system 100 includes cloud clients 102, user devices 104, a cloud platform 106, and a data center 108. Cloud platform 106 may be an example of a public or private cloud network. A cloud client 102 may access cloud platform 106 over a network connection 114. The network connection 114 may include a wired connection, a wireless connection, or both. The network may implement transfer control protocol and internet protocol (TCP/IP), such as the Internet, or may implement other network protocols. A cloud client 102 may be an example of a computing device, such as a head mounted display (e.g., cloud client 102-a), a smartphone (e.g., cloud client 102-b), or a server (e.g., cloud client 102-c). In other examples, a cloud client 102 may be a desktop computer, a tablet, a sensor, or another computing device or system capable of generating, analyzing, transmitting, or receiving communications. In some examples, a cloud client 102 may be part of a business, an enterprise, a non-profit, a startup, or any other organization type.

A cloud client 102 may facilitate communication between the data center 108 and one or multiple user devices 104 to implement an online environment. The network connection 112 may include communications, opportunities, purchases, sales, or any other interaction between a cloud client 102 and a user device 104. The network connection 112 may include a wired connection, a wireless connection, or both. A cloud client 102 may access cloud platform 106 to store, manage, and process the data communicated via one or more network connections 112. In some cases, the cloud client 102 may have an associated security or permission level. A cloud client 102 may have access to certain applications, data, and database information within cloud platform 106 based on the associated security or permission level, and may not have access to others.

The user device 104 may include a dynamic load-balancing component 118. The user device 104 may interact with the cloud client 102 over network connection 112. The network may implement transfer control protocol and internet protocol (TCP/IP), such as the Internet, or may implement other network protocols. The network connection 112 may facilitate transport of data via email, web, text messages, mail, or any other appropriate form of electronic interaction (e.g., network connections 112-*a*, 112-*b,* 112-c, and 112-d) via a computer network. In an example, the user device 104 may be computing device such as a wearable device 104-*a*, a smartphone 104-b, a laptop 104-c or a server 104-d. In other cases, the user device 104 may be another computing system. In some cases, the user device 104 may be operated by a user or group of users. The user or group of users may be a customer, associated with a business, a manufacturer, or any other appropriate organization.

In some implementations, the server 102-c and the server 104-d may represent two servers of a plurality of servers in a distributed computing architecture for AI/ML workloads. Each server may be equipped with one or more hardware accelerators, such as graphics processing units (GPUs), tensor processing units (TPUs), or field-programmable gate arrays (FPGAs), specifically configured to execute computationally intensive AI/ML algorithms. The servers 102-c and 104-d can be interconnected via a high-speed Ethernet network infrastructure that supports Remote Direct Memory Access (RDMA) protocols, specifically RDMA over Converged Ethernet (RoCE), to facilitate efficient data exchange between distributed computing resources.

In this distributed architecture, each server participates in collaborative processing tasks wherein large AI/ML models and their associated datasets are partitioned across the plurality of servers. The server 102-c may establish multiple Queue Pairs (QPs) with server 104-d that together form a dedicated communication channel between specific memory regions on the respective servers. These QPs enable direct memory-to-memory transfers between servers 102-c and 104-d with minimal central processing unit (CPU) involvement, thereby preserving computational resources for AI/ML processing tasks. The servers implement sophisticated load balancing mechanisms as described herein to distribute these data transfers across multiple QPs, with each QP potentially traversing different physical network paths within the network infrastructure. It should be appreciated that the described configuration between server 102-c and 104-d may represent the relationship between a plurality of other servers within the distributed architecture and may be replicated across all servers within the distributed architecture, creating a scalable system wherein any server may establish multiple QPs with any other server in the plurality, as required by the specific communication patterns of the AI/ML workload being executed. Additionally, it should be appreciated that the servers do not have to be part of a cloud client and could represent a server farm that implements the load balance scheduling as further described herein.

Cloud platform 106 may offer an on-demand database service to the cloud client 102. In some cases, cloud platform 106 may be an example of a multi-tenant database system. In this case, cloud platform 106 may serve multiple cloud clients 102 with a single instance of software. However, other types of systems may be implemented, including-but not limited to-client-server systems, mobile device systems, and mobile network systems. In some cases, cloud platform 106 may support an online application. This may include support for sales between buyers and sellers operating user devices 104, service, marketing of products posted by buyers, community interactions between buyers and sellers, analytics, such as user-interaction metrics, applications (e.g., computer vision and machine learning), and the Internet of Things (IoT). Cloud platform 106 may receive data associated with generation of an online environment from the cloud client 102 over network connection 114, and may store and analyze the data. In some cases, cloud platform 106 may receive data directly from a user device 104 and the cloud client 102. In some cases, the cloud client 102 may develop applications to run on cloud platform 106. Cloud platform 106 may be implemented using remote servers. In some cases, the remote servers may be located at one or more data centers 108.

Data center 108 may include multiple servers. The multiple servers may be used for data storage, management, and processing. Data center 108 may receive data from cloud platform 106 via connection 116, or directly from the cloud client 102 or via network connection 112 between a user device 104 and the cloud client 102. The connection 116 may include a wired connection, a wireless connection, or both. Data center 108 may utilize multiple redundancies for security purposes. In some cases, the data stored at data center 108 may be backed up by copies of the data at a different data center.

Server system 110 may include cloud clients 102, a cloud platform 106, a dynamic load-balancing component 118, and a data center 108 that may coordinate with cloud platform 106 and data center 108 to implement an online environment. In some cases, data processing may occur at any of the components of server system 110, or at a combination of these components. Thus, the dynamic load-balancing component 118 may be included in the user device 104, server system 110, or in part or in whole in both. In some cases, servers may perform the data processing. The servers may be a cloud client 102 or located at data center 108. In one implementation, the description above describing the server 102-c and the server 104-d representing two servers of a plurality of servers in a distributed computing architecture for AI/ML workloads may also be applied within the server system 110 where the server system 110 may include a plurality of servers 102-c representing a plurality of servers in a distributed computing architecture for AI/ML workloads. In other words, a first server 102-c and a second server 102-c may establish multiple Queue Pairs (QPs) that together form a dedicated communication channel between specific memory regions on the respective servers. This can also be extrapolated to the plurality of servers 102-c within the server system 110 as described herein. Queue pairs establish bidirectional channels between processing entities for the exchange of data, messages, or other information units. A queue pair consists of a send queue and a receive queue that operate in conjunction to facilitate reliable, ordered data transfer between endpoints. The send queue of one endpoint is conceptually connected to the receive queue of another endpoint, creating a pathway for information flow. The implementation may involve various methods for queue management, message prioritization, flow control, and error handling, which can be tailored based on application requirements, network characteristics, or performance objectives. Queue pairs may incorporate mechanisms for tracking message delivery status, handling retransmissions, managing quality of service parameters, and ensuring data integrity. This approach can be utilized across diverse computing environments including but not limited to distributed systems, parallel processing frameworks, network communication protocols, and interprocess communication mechanisms. Queue pairs are not constrained to any particular hardware platform, software architecture, or technological domain, and may be implemented through various means including software constructs, hardware-assisted mechanisms, or hybrid approaches that optimize performance, reliability, and efficiency of communication.

Some or all of the functionality attributed to the dynamic load-balancing component 118 may be embodied or performed by one or more user devices 104, one or more components of server system 110 (e.g., cloud clients 102, a cloud platform 106, and/or a data center 108), and/or other components of system 100. The dynamic load-balancing component 118 may receive signals and inputs from user device 104 directly. via cloud clients 102, and/or via cloud platform 106 or data center 116.

As described herein, some implementations may utilize the dynamic load-balancing component 118 to measure RTT for data packets transmitted over multiple QPs within the network. The component 118 may compute scheduler weights for these QPs based on the measured RTT, indicating levels of network congestion. Subsequently, the component 118 may adjust the sub-chunk sizes of data packets to be transmitted over the QPs according to the computed scheduler weights. This adjustment may enhance the efficiency of load balancing by dynamically scheduling RDMA traffic across the QPs, thereby optimizing network performance.

It should be appreciated by a person skilled in the art that one or more aspects of the disclosure may be implemented in a system 100 to additionally or alternatively solve other problems than those described above. Furthermore, aspects of the disclosure may provide technical improvements to "conventional" systems or processes as described herein. However, the description and appended drawings only include example technical improvements resulting from implementing aspects of the disclosure, and accordingly do not represent all of the technical improvements provided within the scope of the claims.

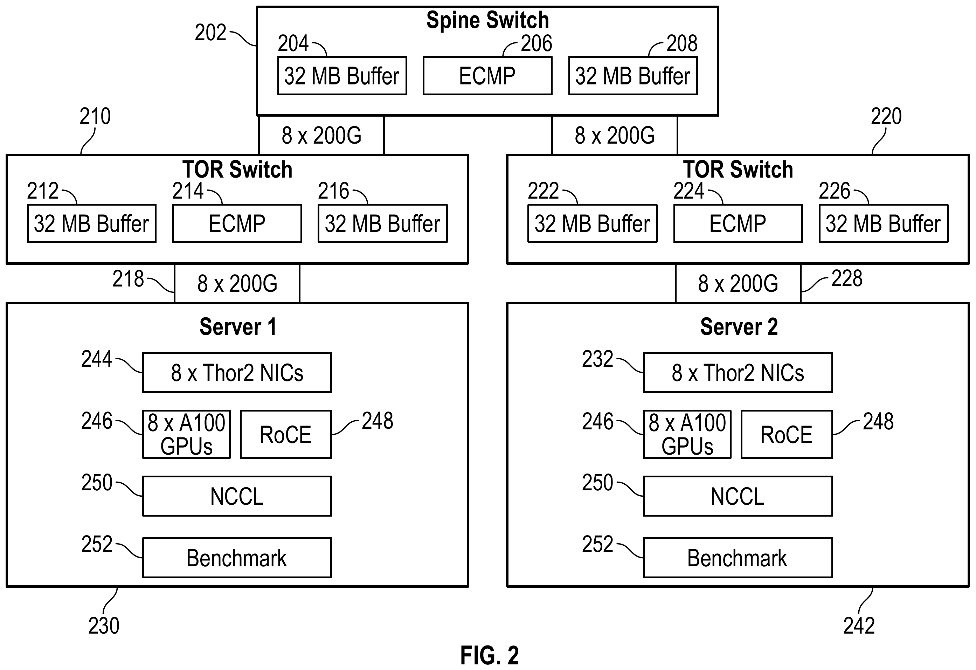

FIG. 2 shows network test configuration 200 which supports techniques for dynamic load balancing of network traffic based on round trip time measurements in accordance with various aspects of the present disclosure. As depicted in FIG. 2, the network test configuration 200 may include one or more of a spine switch 202, a 32 MB buffer 204, an ECMP 206, a 32 MB buffer 208, a first TOR switch 210, a 32 MB buffer 212, an ECMP 214, a 32 MB buffer 216, an 8 x 200G 218, a second TOR switch 220, a 32 MB buffer 222, an ECMP 224, a 32 MB buffer 226, an 8 x 200G 228, a first server 230, an 8 x NICs 232, an 8 x GPUs 234, a ROCE 236, an CCL 238, a benchmark 240, a second server 242, an 8 x NICs 244, an 8 x GPUs 246, a ROCE 248, an CCL 250, a benchmark 252, and/or other components. Although FIG. 2 represents a test network to illustrate various improvements over conventional techniques, it should be appreciated that the techniques for QP load balance scheduling described herein can be applied to a distributed computing architecture for AI/ML workloads.

The spine switch 202 may include multiple network paths for data transmission. The spine switch 202 may be a central component in the network fabric, connecting various Top Of Rack (TOR) switches. It may facilitate high-speed data transfer between different network segments. In some implementations, the spine switch 202 may be connected to multiple TOR switches, enabling efficient data routing across the network. The spine switch 202 may be configured to handle large volumes of data traffic, making it suitable for data-intensive AI/ML workloads.

The 32 MB buffer 204 may store data temporarily to manage network congestion. The 32 MB buffer 204 may be integrated into the spine switch 202 to help smooth out data flow and prevent packet loss. It may act as a temporary holding area for data packets that are waiting to be processed or forwarded. In some implementations, the 32 MB buffer 204 may work in conjunction with other buffers in the network to ensure consistent data transmission. The buffer size may be chosen based on the expected data traffic and network conditions.

The ECMP 206 may distribute network traffic across multiple paths based on hash values. The ECMP 206 may be a routing mechanism within the spine switch 202 that helps balance the load across available network paths. It may use a hash function to determine the path for each data packet, ensuring that traffic is evenly distributed. In some implementations, the ECMP 206 may consider various packet header fields, such as source and destination IP addresses, to make routing decisions. This approach may help prevent any single path from becoming overloaded.

The 32 MB buffer 208 may store data temporarily to manage network congestion. The 32 MB buffer 208 may be another buffer within the spine switch 202, similar to the 32 MB buffer 204. It may provide additional capacity for handling data bursts and preventing congestion. In some implementations, the 32 MB buffer 208 may be strategically placed to optimize data flow through the spine switch 202. The buffer may be particularly useful in scenarios where data traffic is highly variable.

The first TOR switch 210 may connect servers to the network fabric. The first TOR switch 210 may be located at the top of a server rack and may provide connectivity between the servers and the rest of the network. It may have multiple ports to connect to various servers and other network devices. In some implementations, the first TOR switch 210 may be linked to the spine switch 202, enabling data exchange between different racks. The TOR switch may play a crucial role in managing data traffic within a data center.

The 32 MB buffer 212 may store data temporarily to manage network congestion. The 32 MB buffer 212 may be integrated into the first TOR switch 210, similar to the buffers in the spine switch 202. It may help manage data flow and prevent packet loss by temporarily holding data packets. In some implementations, the 32 MB buffer 212 may work in conjunction with other buffers in the network to ensure smooth data transmission. The buffer size may be chosen based on the expected data traffic and network conditions.

The ECMP 214 may distribute network traffic across multiple paths based on hash values. The ECMP 214 may be a routing mechanism within the first TOR switch 210 that helps balance the load across available network paths. It may use a hash function to determine the path for each data packet, ensuring that traffic is evenly distributed. In some implementations, the ECMP 214 may consider various packet header fields, such as source and destination IP addresses, to make routing decisions. This approach may help prevent any single path from becoming overloaded.

The 32 MB buffer 216 may store data temporarily to manage network congestion. The 32 MB buffer 216 may be another buffer within the first TOR switch 210, similar to the 32 MB buffer 212. It may provide additional capacity for handling data bursts and preventing congestion. In some implementations, the 32 MB buffer 216 may be strategically placed to optimize data flow through the first TOR switch 210. The buffer may be particularly useful in scenarios where data traffic is highly variable.

The 8 x 200G 218 may represent the network interface speed of the first TOR switch 210. The 8 x 200G 218 may indicate that the first TOR switch 210 has eight ports, each capable of 200 Gbps data transfer speed. This high-speed connectivity may be essential for handling large volumes of data traffic in AI/ML workloads. In some implementations, the 8 x 200G 218 may connect to high-performance servers and other network devices. The network interface speed may be chosen based on the performance requirements of the data center.

The second TOR switch 220 may connect servers to the network fabric. The second TOR switch 220 may be similar to the first TOR switch 210, providing connectivity between servers and the rest of the network. It may have multiple ports to connect to various servers and other network devices. In some implementations, the second TOR switch 220 may be linked to the spine switch 202, enabling data exchange between different racks. The TOR switch may play a crucial role in managing data traffic within a data center.

The 32 MB buffer 222 may store data temporarily to manage network congestion. The 32 MB buffer 222 may be integrated into the second TOR switch 220, similar to the buffers in the first TOR switch 210. It may help manage data flow and prevent packet loss by temporarily holding data packets. In some implementations, the 32 MB buffer 222 may work in conjunction with other buffers in the network to ensure smooth data transmission. The buffer size may be chosen based on the expected data traffic and network conditions.

The ECMP 224 may distribute network traffic across multiple paths based on hash values. The ECMP 224 may be a routing mechanism within the second TOR switch 220 that helps balance the load across available network paths. It may use a hash function to determine the path for each data packet, ensuring that traffic is evenly distributed. In some implementations, the ECMP 224 may consider various packet header fields, such as source and destination IP addresses, to make routing decisions. This approach may help prevent any single path from becoming overloaded.

The 32 MB buffer 226 may store data temporarily to manage network congestion. The 32 MB buffer 226 may be another buffer within the second TOR switch 220, similar to the 32 MB buffer 222. It may provide additional capacity for handling data bursts and preventing congestion. In some implementations, the 32 MB buffer 226 may be strategically placed to optimize data flow through the second TOR switch 220. The buffer may be particularly useful in scenarios where data traffic is highly variable.

The 8 x 200G 228 may represent the network interface speed of the second TOR switch 220. The 8 x 200G 228 may indicate that the second TOR switch 220 has eight ports, each capable of 200 Gbps data transfer speed. This high-speed connectivity may be essential for handling large volumes of data traffic in AI/ML workloads. In some implementations, the 8 x 200G 228 may connect to high-performance servers and other network devices. The network interface speed may be chosen based on the performance requirements of the data center.

The first server 230 may perform computational tasks and data processing. The first server 230 may be equipped with high-performance hardware components to handle demanding AI/ML workloads. It may be connected to the first TOR switch 210 to facilitate data exchange with other servers and network devices. In some implementations, the first server 230 may be part of a larger cluster of servers working together on distributed computing tasks. The server may be configured to run various software applications and frameworks for AI/ML processing.

The 8 x NICs 232 may handle network communication for the first server 230. The 8 x NICs 232 may provide high-speed network interfaces for the first server 230, enabling efficient data transfer. Each NIC may be capable of handling large volumes of data traffic, making them suitable for data-intensive applications. In some implementations, the 8 x NICs 232 may be connected to the first TOR switch 210, facilitating communication with other network devices. The NICs may be chosen based on their performance characteristics and compatibility with the server hardware.

The 8 x GPUs 234 may perform parallel processing for AI/ML workloads on the first server 230. The 8 x GPUs 234 may be high-performance graphics processing units designed for computational tasks. They may be used to accelerate AI/ML algorithms by performing parallel processing. In some implementations, the 8 x GPUs 234 may be integrated into the first server 230, working together with other hardware components to handle complex computations. The GPUs may be chosen based on their processing power and compatibility with the server architecture.

The ROCE 236 may enable direct memory access over the network for the first server 230. The ROCE 236 may be a technology that allows the first server 230 to transfer data directly between its memory and the memory of other network devices. This may reduce latency and CPU overhead, making it suitable for high-performance applications. In some implementations, the ROCE 236 may be used in conjunction with the 8 x NICs 232 to facilitate efficient data transfer. The technology may be chosen based on its compatibility with the server hardware and network infrastructure.

The CCL 238 may manage collective communication operations for the first server 230. The CCL 238 may be a software library designed to optimize communication between multiple GPUs and servers. It may handle tasks such as data synchronization and message passing, which are essential for distributed AI/ML workloads. In some implementations, CCLs (Collective Communication Libraries) are specialized software frameworks designed to optimize communication patterns in distributed computing environments by providing efficient implementations of operations that require data exchange between multiple nodes. In some implementations, the CCL 238 may be integrated into the first server 230, working together with the 8 x GPUs 234 to manage data exchange. The library may be chosen based on its performance characteristics and compatibility with the server hardware and software.

The benchmark 240 may measure the performance of the first server 230. The benchmark 240 may be a set of tests designed to evaluate the computational and data processing capabilities of the first server 230. It may include various metrics such as throughput, latency, and resource utilization. In some implementations, the benchmark 240 may be used to compare the performance of the first server 230 with other servers in the network. The results may help identify areas for improvement and guide hardware and software configuration decisions.

The second server 242 may perform computational tasks and data processing. The second server 242 may be equipped with high-performance hardware components to handle demanding AI/ML workloads. It may be connected to the second TOR switch 220 to facilitate data exchange with other servers and network devices. In some implementations, the second server 242 may be part of a larger cluster of servers working together on distributed computing tasks. The server may be configured to run various software applications and frameworks for AI/ML processing.

The 8 x NICs 244 may handle network communication for the second server 242. The 8 x NICs 244 may provide high-speed network interfaces for the second server 242, enabling efficient data transfer. Each NIC may be capable of handling large volumes of data traffic, making them suitable for data-intensive applications. In some implementations, the 8 x NICs 244 may be connected to the second TOR switch 220, facilitating communication with other network devices. The NICs may be chosen based on their performance characteristics and compatibility with the server hardware.

The 8 x GPUs 246 may perform parallel processing for AI/ML workloads on the second server 242. The 8 x GPUs 246 may be high-performance graphics processing units designed for computational tasks. They may be used to accelerate AI/ML algorithms by performing parallel processing. In some implementations, the 8 x GPUs 246 may be integrated into the second server 242, working together with other hardware components to handle complex computations. The GPUs may be chosen based on their processing power and compatibility with the server architecture.

The ROCE 248 may enable direct memory access over the network for the second server 242. The ROCE 248 may be a technology that allows the second server 242 to transfer data directly between its memory and the memory of other network devices. This may reduce latency and CPU overhead, making it suitable for high-performance applications. In some implementations, the ROCE 248 may be used in conjunction with the 8 x NICs 244 to facilitate efficient data transfer. The technology may be chosen based on its compatibility with the server hardware and network infrastructure.

The CCL 250 may manage collective communication operations for the second server 242. The CCL 250 may be a software library designed to optimize communication between multiple GPUs and servers. It may handle tasks such as data synchronization and message passing, which are essential for distributed AI/ML workloads. In some implementations, the CCL 250 may be integrated into the second server 242, working together with the 8 x GPUs 246 to manage data exchange. The library may be chosen based on its performance characteristics and compatibility with the server hardware and software.

The benchmark 252 may measure the performance of the second server 242. The benchmark 252 may be a set of tests designed to evaluate the computational and data processing capabilities of the second server 242. It may include various metrics such as throughput, latency, and resource utilization. In some implementations, the benchmark 252 may be used to compare the performance of the second server 242 with other servers in the network. The results may help identify areas for improvement and guide hardware and software configuration decisions.

In some implementations, the components shown in the image may be arranged to facilitate efficient RDMA traffic scheduling across QPs. The spine switch 202 may include two 32 MB buffers 204 and 208, and an ECMP 206, which may be connected to the first TOR switch 210 and the second TOR switch 220 via 8 x 200G links 218 and 228. The first TOR switch 210 may include two 32 MB buffers 212 and 216, and an ECMP 214, while the second TOR switch 220 may include two 32 MB buffers 222 and 226, and an ECMP 224.

In some implementations, the first server 230 may be equipped with 8 x NICs 232, 8 x GPUs 234, RoCE 236, CCL 238, and benchmark 240, and may be communicably coupled to the first TOR switch 210. Similarly, the second server 242 may be equipped with 8 x NICs 244, 8 x GPUs 246, RoCE 248, CCL 250, and benchmark 252, and may be communicably coupled to the second TOR switch 220.

In some implementations, the components may operate together to dynamically schedule RDMA traffic across QPs based on RTT measurements. The spine switch 202 may route traffic through the ECMP 206 to the TOR switches 210 and 220, which may further distribute the traffic to the servers 230 and 242. The servers 230 and 242 may use the CCL 238 and 250 to measure RTT and determine scheduler weights, which may be used to adjust the sub-chunk sizes for transmission over the QPs. This dynamic scheduling may help manage network congestion and improve overall system performance.

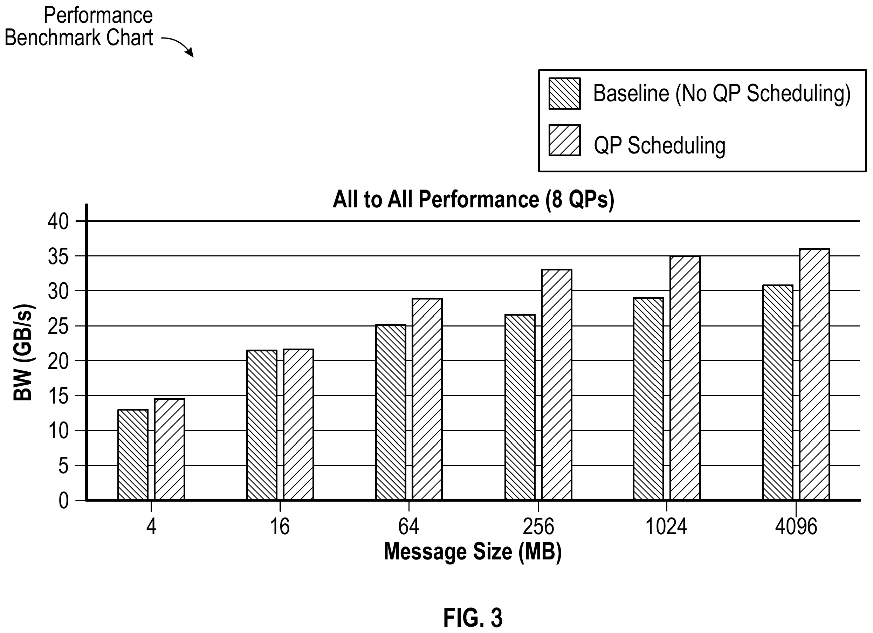

FIG. 3 shows a graph 300 illustrating performance benchmark measurements in accordance with various aspects of the present disclosure. The graph 300 may represent the Round Trip Time (RTT) measurements made by CCL software in user-space, which may be used to dynamically schedule RDMA traffic across Queue Pairs (QPs) based on network congestion. The graph 300 may be relevant to the method of computing scheduler weights from RTT estimates and adjusting sub-chunk sizes for transmission to enhance load balancing efficiency.

The x-axis of the graph 300 may represent message size in megabytes. The y-axis of the graph 300 may represent the bandwidth in Gigabytes. The data points on the graph 300 may be marked with bar graphs that indicate the bandwidth for each message size compared between a baseline with no QP scheduling and QP scheduling. In the tested configuration, QP Scheduling provided performance improvements up to 24%.

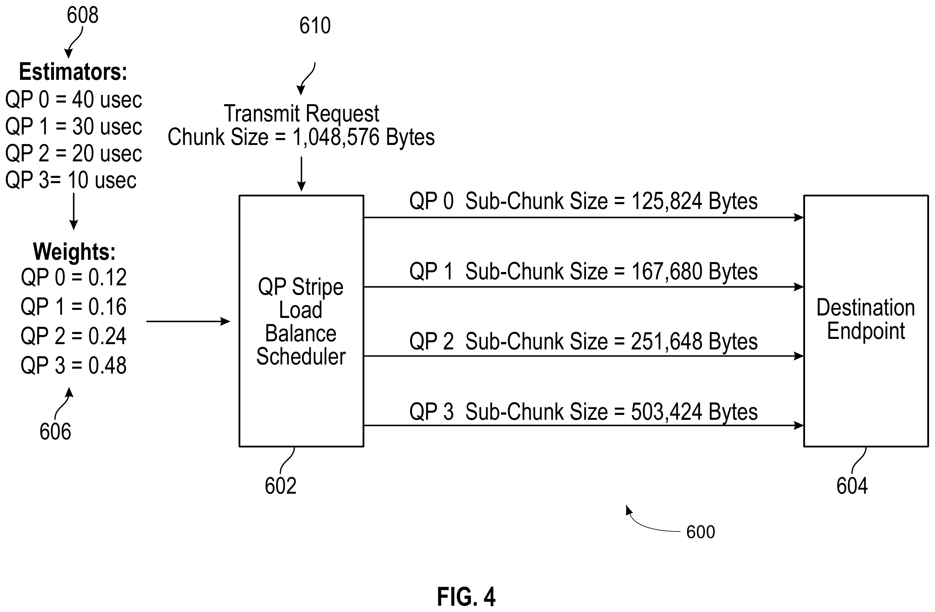

FIG. 4 shows QP scheduler operation 600 which supports techniques for dynamic load balancing of network traffic based on round trip time measurements in accordance with various aspects of the present disclosure. As depicted in FIG. 4, the QP scheduler operation 600 may include one or more of an QP stripe load balance scheduler 602, a destination endpoint 604, and/or other components.

The QP stripe load balance scheduler 602 may manage the distribution of network traffic across multiple queue pairs based on round trip time measurements. In some implementations, the QP stripe load balance scheduler 602 may be a server (e.g., server 102-c, server 104-d, etc.) The QP stripe load balance scheduler 602 may determine the sub-chunk sizes to be sent on each queue pair by using scheduler weights 606 derived from RTT estimates (estimators 608). The scheduler weights 608 may be periodically refreshed according to a configured update interval to adapt to changing network conditions. In some implementations, the QP stripe load balance scheduler 602 may be integrated into the CCL code to facilitate efficient load balancing in AI/ML workloads.

The destination endpoint 604 may receive the dynamically balanced network traffic as determined by the QP stripe load balance scheduler 602. The destination endpoint 604 may include components such as network interface cards (NICs) and GPUs to handle the incoming data. The received data may be processed by the destination endpoint 604 to perform tasks such as gradient synchronization during distributed training. In some implementations, the destination endpoint 604 may be similar to the first server 230, the second server 242, the server 102-c, or the server 104-d as described herein.

In some implementations, the QP Stripe Load Balance Scheduler 602 may receive the scheduler weights 608 for various QPs, such as QP0, QP1, QP2, and QP3. The scheduler 602 may then determine sub-chunk sizes based on these weights and the transmit request chunk size 610. For instance, QP0 may have a sub-chunk size of 125,824 bytes, QP1 may have a sub-chunk size of 167,680 bytes, QP2 may have a sub-chunk size of 251,648 bytes, and QP3 may have a sub-chunk size of 503,424 bytes. These sub-chunks may be transmitted to the destination endpoint 604, which may receive the data from the respective QPs.

In some implementations, the QP Stripe Load Balance Scheduler 602 may operate by distributing the transmit request chunk size across multiple QPs based on the determined weights. The scheduler 602 may ensure that the sub-chunk sizes are rounded down to the next lowest multiple of 128 bytes for QP0, QP1, and QP2, while QP3 may handle the remainder of the transmit request. This distribution may allow the destination endpoint 604 to receive data efficiently from the different QPs, potentially reducing network congestion and improving overall communication performance.

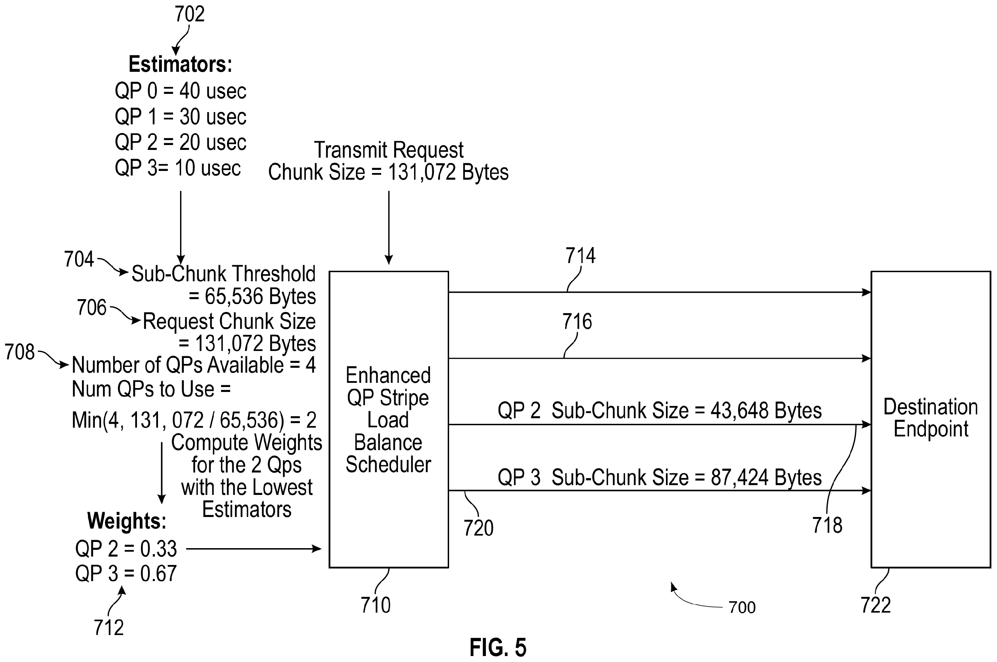

FIG. 5 shows scheduler operation illustration 700 which supports techniques for dynamic load balancing of network traffic based on round trip time measurements in accordance with various aspects of the present disclosure. As depicted in FIG. 5, the scheduler operation illustration 700 may include one or more of an estimator 702, a sub-chunk threshold 704, a request chunk size 706, a number of QPs available 708, an enhanced QP stripe load balance scheduler 710, a weight 712, a QP0 714, a QP1 716, a QP2 718, a QP3 720, a destination endpoint 722, and/or other components.

The estimator 702 may determine the round trip time measurements for network traffic. The estimator 702 may be a software or hardware component that measures the time taken for a data packet to travel from the source to the destination and back. The estimator 702 may use various algorithms to filter and stabilize the RTT measurements to form a more reliable estimate of network congestion. The estimator 702 may interact with other components such as the QP scheduler 710 to adjust the load balancing based on the RTT measurements. In some implementations, the estimator 702 may be integrated into the network interface card (NIC) hardware for more accurate measurements.

The sub-chunk threshold 704 may define the minimum size for sub-chunks in the load balancing process. The sub-chunk threshold 704 may be a configurable parameter that sets a lower limit on the size of data chunks that can be divided and transmitted over multiple queue pairs (QPs). The sub-chunk threshold 704 may help in avoiding the overhead associated with transmitting very small sub-chunks, which may not be efficient. The sub-chunk threshold 704 may be used by the enhanced QP stripe load balance scheduler 710 to determine the number of QPs to use for a given transmit request chunk size 706. In some implementations, the sub-chunk threshold 704 may be dynamically adjusted based on network conditions. In some implementations, the enhanced QP stripe load balance scheduler 710 can be the server 102-c, the server 104-d, etc.

The request chunk size 706 may specify the total size of the data to be transmitted. The request chunk size 706 may be determined by the application or the collective communication library (CCL) based on the data to be sent between endpoints. The request chunk size 706 may be divided into smaller sub-chunks for transmission over multiple QPs to achieve load balancing. The request chunk size 706 may be used in conjunction with the sub-chunk threshold 704 to determine the number of QPs to be used for transmission. In some implementations, the request chunk size 706 may vary depending on the specific operation being performed, such as gradient synchronization or parameter updates in AI/ML workloads.

The number of QPs available 708 may indicate the total number of queue pairs that can be used for load balancing. The number of QPs available 708 may be determined by the network configuration and the capabilities of the network interface cards (NICs) on the servers. The number of QPs available 708 may be used by the QP scheduler 710 to distribute the traffic load across multiple paths in the network. The number of QPs available 708 may be a critical factor in achieving effective load balancing and avoiding congestion. In some implementations, the number of QPs available 708 may be dynamically adjusted based on the network conditions and the requirements of the application.

The enhanced QP stripe load balance scheduler 710 may manage the distribution of data across multiple queue pairs based on the round trip time measurements. The enhanced QP stripe load balance scheduler 710 may use the RTT estimates provided by the estimator 702 to determine the weights for each QP. The enhanced QP stripe load balance scheduler 710 may then use these weights to allocate the sub-chunk sizes for each QP, ensuring that more traffic is sent over less congested paths. The enhanced QP stripe load balance scheduler 710 may periodically update the scheduler weights to adapt to changing network conditions. In some implementations, the enhanced QP stripe load balance scheduler 710 may be integrated into the collective communication library (CCL) to optimize the performance of distributed AI/ML workloads.

The weight 712 may represent the proportion of traffic assigned to each queue pair. The weight 712 may be determined based on the RTT estimates provided by the estimator 702. The weight 712 may be used by the enhanced QP stripe load balance scheduler 710 to allocate the sub-chunk sizes for each QP. The weight 712 may be periodically updated to reflect the current network conditions and ensure efficient load balancing. In some implementations, the weight 712 may be adjusted based on the specific requirements of the application and the characteristics of the network.

The QP0 714 may be one of the queue pairs used in the load balancing process. The QP0 714 may be established between two endpoints to provide a dedicated communication channel for data transfer. The QP0 714 may be assigned a weight based on the RTT measurements, which determines the proportion of traffic it handles. The QP0 714 may be used in conjunction with other QPs, such as QP1 716, QP2 718, and QP3 720, to distribute the traffic load across multiple paths. In some implementations, the QP0 714 may be dynamically adjusted based on the network conditions and the requirements of the application.

The QP1 716 may be another queue pair involved in the load balancing process. The QP1 716 may be established between two endpoints to provide a dedicated communication channel for data transfer. The QP1 716 may be assigned a weight based on the RTT measurements, which determines the proportion of traffic it handles. The QP1 716 may work in conjunction with other QPs, such as QP0 714, QP2 718, and QP3 720, to distribute the traffic load across multiple paths. In some implementations, the QP1 716 may be dynamically adjusted based on the network conditions and the requirements of the application.

The QP2 718 may be a queue pair that participates in the dynamic load balancing. The QP2 718 may be established between two endpoints to provide a dedicated communication channel for data transfer. The QP2 718 may be assigned a weight based on the RTT measurements, which determines the proportion of traffic it handles. The QP2 718 may be used in conjunction with other QPs, such as QP0 714, QP1 716, and QP3 720, to distribute the traffic load across multiple paths. In some implementations, the QP2 718 may be dynamically adjusted based on the network conditions and the requirements of the application.

The QP3 720 may be a queue pair included in the scheduler operation. The QP3 720 may be established between two endpoints to provide a dedicated communication channel for data transfer. The QP3 720 may be assigned a weight based on the RTT measurements, which determines the proportion of traffic it handles. The QP3 720 may be used in conjunction with other QPs, such as QP0 714, QP1 716, and QP2 718, to distribute the traffic load across multiple paths. In some implementations, the QP3 720 may be dynamically adjusted based on the network conditions and the requirements of the application.

The destination endpoint 722 may be the target location for the transmitted data. In some implementations, the destination endpoint 722 may be the same as or similar to the destination endpoint 604, as described herein.

In some implementations, the estimator 702 may determine the RTT measurements for each QP, which may include QP0 714, QP1 716, QP2 718, and QP3 720. The sub-chunk threshold 704 may be set to constrain the minimum sub-chunk size, influencing the division of the request chunk size 706. The number of QPs available 708 may be considered to determine the number of QPs to use. The enhanced QP stripe load balance scheduler 710 may compute weights 712 for the selected QPs based on the RTT estimates. QP0 714 and QP1 716 may not be used if their estimators indicate higher congestion. QP2 718 and QP3 720 may handle the sub-chunks of the transmit request, with QP2 718 managing a sub-chunk size of 43,648 bytes and QP3 720 managing a sub-chunk size of 87,424 bytes. The destination endpoint 722 may receive the transmitted data from the selected QPs.

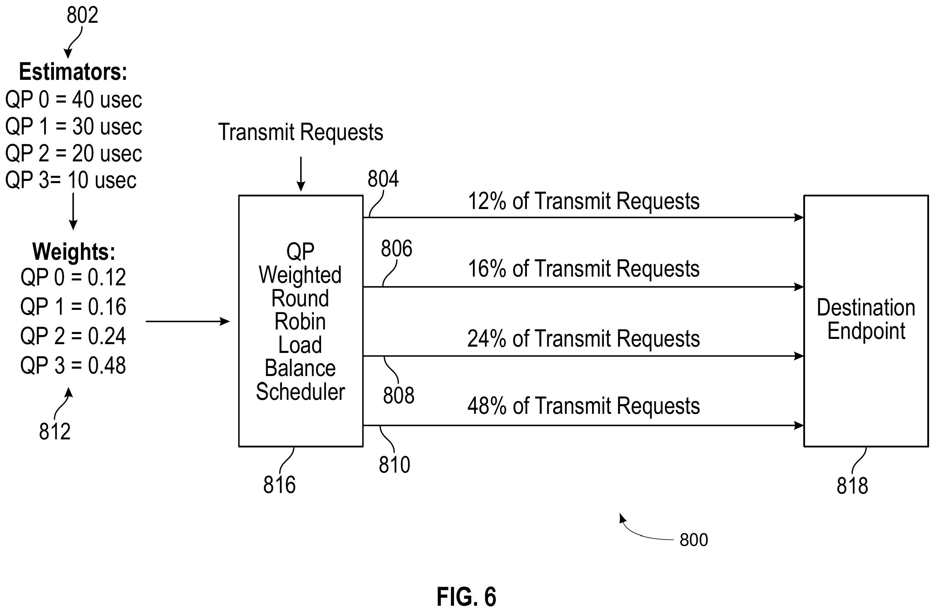

FIG. 6 shows load balance scheduler 800 which supports techniques for dynamic load balancing of network traffic based on round trip time measurements in accordance with various aspects of the present disclosure. As depicted in FIG. 6, the load balance scheduler 800 may include one or more of estimators 802, a QP 0 804, a QP 1 806, a QP 2 808, a QP 3 810, weights 812, a QP weighted round robin load balance scheduler 814, a destination endpoint 818, and/or other components.

The estimators 802 may determine network congestion based on round trip time measurements. In some implementations, the estimators 802 may be the same as or similar to the estimators 702, as described herein. For example, the estimators 802 may be 40 microseconds, 30 microseconds, 20 microseconds, and 10 microseconds for QP 0 804, QP 1 806, QP 2 808, and QP 3 810, respectively.

The QP 0 804 may handle a portion of the network traffic based on its assigned weight. The QP 0 804 may be one of the multiple queue pairs used to establish point-to-point connectivity between endpoints. In some implementations, the QP 0 804 may be similar to QP0 714.

The QP 1 806 may manage another portion of the network traffic according to its specific weight. The QP 1 806 may be configured to handle traffic based on the congestion estimates provided by the estimator 802. The QP 1 806 may be part of a multi-QP strategy to distribute traffic across multiple paths. In some implementations, the QP 1 806 may be similar to QP1 716.

The QP 2 808 may be responsible for directing traffic based on its calculated weight. The QP 2 808 may use the weights determined by the estimator 802 to manage its portion of the traffic. The QP 2 808 may be involved in both striping and round robin load balancing methods. In some implementations, the QP 2 808 may be similar to QP2 718.

The QP 3 810 may distribute traffic in line with its determined weight. The QP 3 810 may be one of the queue pairs that receive traffic based on the congestion levels measured by the estimator 802. The QP 3 810 may be used in scenarios where multiple QPs are required to handle large data transfers. In some implementations, the QP 3 810 may be similar to QP3 720.

The weights 812 may represent the relative load assigned to each queue pair. In some implementations, the weights 812 correspond to 0.12, 0.16, 0.24, and 0.48 for QP 0 804, QP 1 806, QP 2 808, and QP 3 810, respectively.

The QP weighted round robin load balance scheduler 814 may allocate traffic across queue pairs based on their weights. In some implementations, the QP weighted round robin load balance scheduler 814 may distribute traffic by considering both weights and sub-chunk thresholds.

The destination endpoint 818 may receive the balanced network traffic from the queue pairs. In some implementations, the destination endpoint 818 may be the same as or similar to the destination endpoint 604, as described herein.

In some implementations, the estimators 802 may determine the RTT measurements for QP 0 804, QP 1 806, QP 2 808, and QP 3 810. These measurements may be used to form weights 812, which may indicate the percentage of transmit requests allocated to each QP. The QP weighted round robin load balance scheduler 814 may use these weights to distribute the transmit requests across the QPs. For example, the weighted round robin load balance scheduler 814 may send an entire transmit request from the plurality of transmit requests on one of the QPs, where that QP was selected based on the weights. The destination endpoint 818 may receive the transmit requests from the QPs, ensuring efficient communication across the network.

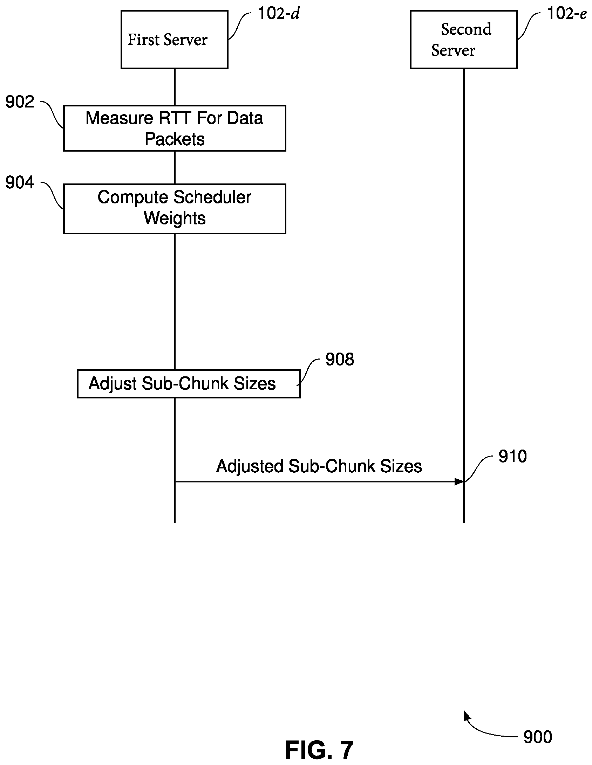

FIG. 7 illustrates an example of a process flow 900 that supports dynamic load balancing of network traffic based on round trip time measurements in accordance with aspects of the present disclosure. In some examples, the process flow 900 may implement aspects of the system 100. For example, the process flow 900 may include a first server 102-d and a second server 102-e, which may be examples of corresponding devices described herein (e.g., server 102-c), as part of a distributed network with a plurality of servers for processing AI/ML workloads. In some implementations, the first server 102-d measures round trip time (RTT) for data packets transmitted over a plurality of queue pairs (QPs) in a network, computes scheduler weights based on the measured RTT to indicate levels of network congestion, adjusts sub-chunk sizes of data packets based on the computed scheduler weights, and transmits the adjusted sub-chunk sizes over the plurality of QPs according to the computed scheduler weights to the second server 102-e.

At 902, the first server 102-d may measure round trip time (RTT) for data packets transmitted over a plurality of queue pairs (QPs) in a network. For example, the first server 102-d may measure RTT by sending data packets to the second server 102-e and waiting for acknowledgment packets. In some implementations, the first server 102-d may measure RTT by recording the time taken for data packets to travel to the second server 102-e and back. In some implementations, RTT determination involves the utilization of RDMA read operations. In this approach, the initiating server issues a small RDMA read request targeting a pre-registered memory region on the remote server. This read request traverses the network infrastructure to reach the destination server, whereupon the destination server's RDMA Network Interface Card (RNIC) processes the request without central processing unit (CPU) intervention and automatically transmits the requested data back to the initiating server. In some implementations, RTT measurement employs send/receive operation pairs with embedded timestamps. In this methodology, the initiating server transmits a message containing a high-precision timestamp through an established Queue Pair (QP) to the destination server. Upon receipt of this message, the destination server immediately returns the message to its origin without modification. The initiating server, upon receiving the returned message, calculates the difference between the current time and the originally embedded timestamp, thus determining the RTT. In some implementations, hardware-based mechanisms permit the issuance of specialized diagnostic commands to the RNIC, which subsequently tracks packet transit times at the hardware level. The measured results are then reported back to the measurement software through device-specific interfaces or memory-mapped registers. This methodology leverages purpose-built hardware timing circuits within the RNIC, potentially offering superior accuracy compared to software-based timing mechanisms. In some implementations, RTT measurements may be conducted continuously in a non-intrusive manner, utilizing specialized probe packets or piggybacking timing information on existing data transmissions. The first server 102-d may measure RTT for different QPs to determine network congestion levels.

At 904, the first server 102-d may compute scheduler weights for the plurality of QPs based on the measured RTT, the scheduler weights indicating levels of network congestion. For example, the first server 102-d may determine the scheduler weights by applying an estimator function to the measured RTT values as described herein. In some implementations, the first server 102-d may use a weighted average estimator to determine the scheduler weights, which may respond more quickly to changes in RTT. The first server 102-d may periodically refresh the scheduler weights according to a configured update interval to account for changing network conditions.

At 908, the first server 102-d may adjust sub-chunk sizes of data packets to be transmitted over the plurality of QPs based on the computed scheduler weights. For example, the first server 102-e may determine that QP0 should handle 12% of the data packets, QP1 should handle 16%, QP2 should handle 24%, and QP3 should handle 48% based on the scheduler weights. In some implementations, the first server 102-d may round down the sub-chunk sizes to the next lowest multiple of 128 bytes to ensure efficient transmission. The first server 102-d may use a threshold to constrain the minimum sub-chunk size, such as 64 KB, to avoid overheads associated with transmitting smaller sub-chunks.

At 910, the first server 102-d may transmit, to the second server 102-e, the adjusted sub-chunk sizes over the plurality of QPs according to the computed scheduler weights. For example, the first server 102-d may use a weighted distribution to determine the sub-chunk sizes for each QP, ensuring that the QPs with lower congestion may handle larger sub-chunks. In some implementations, the first server 102-d may periodically update the sub-chunk sizes based on new scheduler weights to adapt to changing network conditions. The first server 102-d may also use a threshold to constrain the sub-chunk sizes, preventing them from becoming too small and causing inefficiencies. In some implementations, the first server 102-d may round down the sub-chunk sizes to the next lowest multiple of 128 bytes to ensure efficient transmission. The first server 102-d may use a threshold to constrain the minimum sub-chunk size, such as 64 KB, to avoid overheads associated with transmitting smaller sub-chunks.

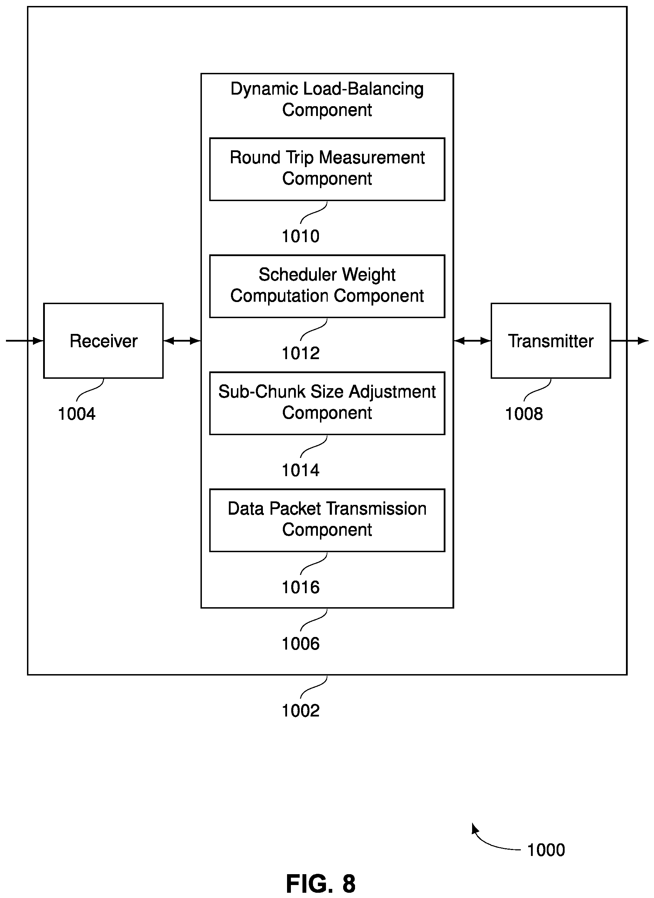

FIG. 8 shows a block diagram 1000 of an apparatus 1002 that supports dynamic load balancing of network traffic based on round trip time measurements in accordance with various aspects of the present disclosure. The apparatus 1002 may include an input module 1004, dynamic load-balancing component 1006, and an output module 1008. The apparatus 1002 may also include a processor. Each of these components may be in communication with one another (e.g., via one or more buses). In some cases, the apparatus 1002 may be an example of a user terminal, a database server, or a system containing multiple computing devices.

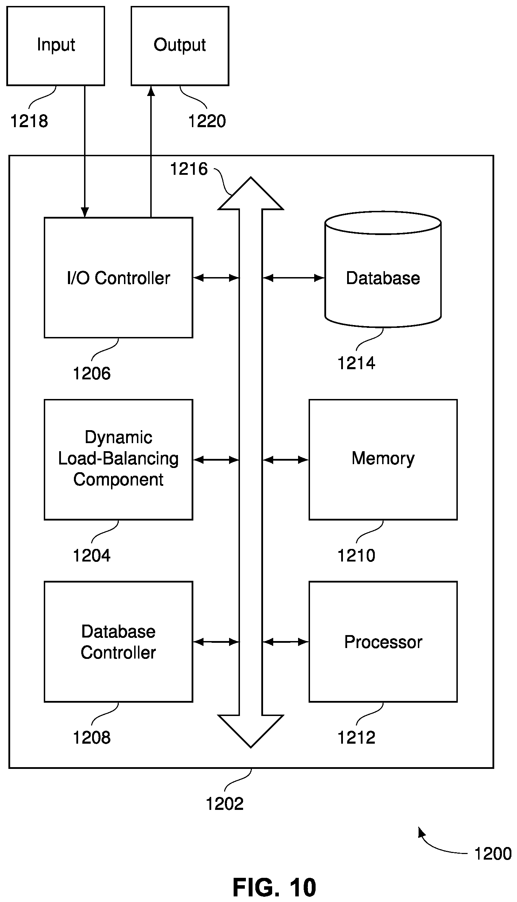

The input module 1004 may manage input signals for the apparatus 1002. For example, the input module 1004 may identify input signals based on an interaction with a modem, a keyboard, a mouse, a touchscreen, or a similar device. These input signals may be associated with user input or processing at other components or devices. In some cases, the input module 1004 may utilize an operating system such as iOS^{®}, ANDROID^{®}, MS-DOS^{®}, MS-WINDOWS^{®}, OS/2^{®}, UNIX^{®}, LINUX^{®}, or another known operating system to handle input signals. The input module 1004 may send aspects of these input signals to other components of the apparatus 1002 for processing. In some cases, the input module 1004 may be a component of an input/output (I/O) controller 1206 as described with reference to FIG. 10.

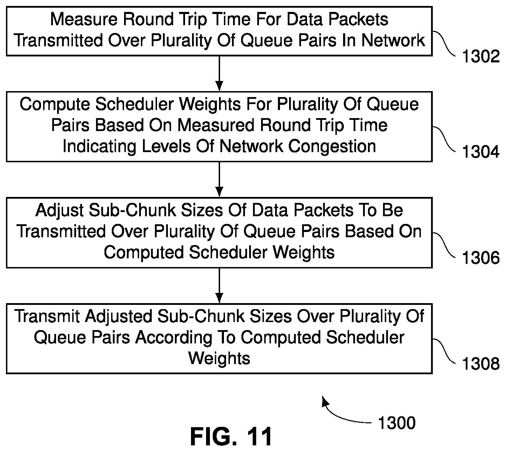

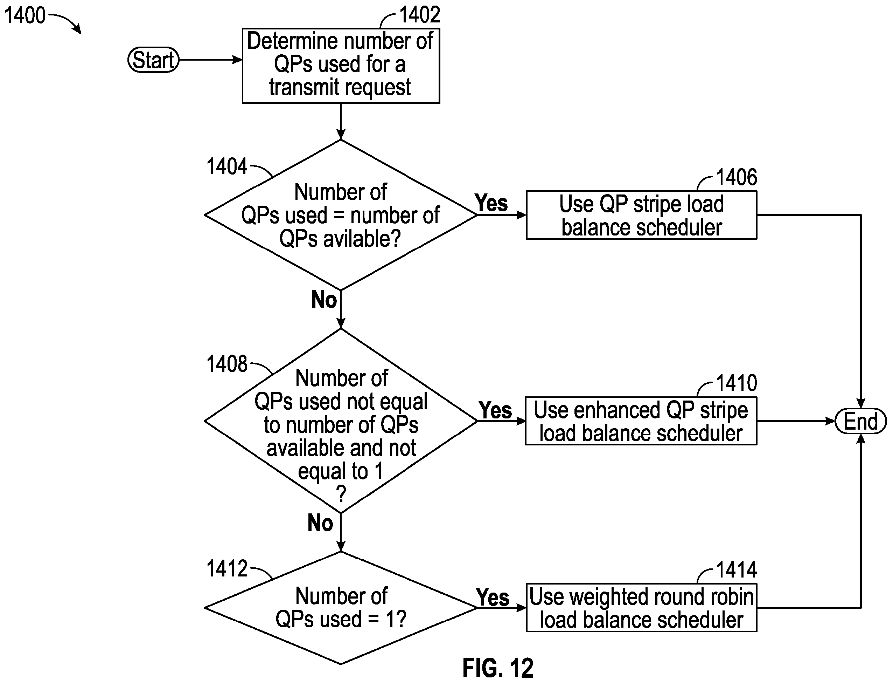

The dynamic load-balancing component 1006 may include one or more of a round trip measurement component 1010, a scheduler weight computation component 1012, a sub-chunk size adjustment component 1014, a data packet transmission component 1016, and/or other components. The dynamic load-balancing component 1006 may be an example of aspects of the dynamic load-balancing component 1102 or 1204 described with reference to FIGS. 11 and 12.

The round trip measurement component 1010 may be configured as or otherwise support a means for measuring round trip time (RTT) for data packets transmitted over a plurality of queue pairs (QPs) in a network. The scheduler weight computation component 1012 may be configured as or otherwise support a means for computing scheduler weights for the plurality of QPs based on the measured RTT, the scheduler weights indicating levels of network congestion. The sub-chunk size adjustment component 1014 may be configured as or otherwise support a means for adjusting sub-chunk sizes of data packets to be transmitted over the plurality of QPs based on the computed scheduler weights. The data packet transmission component 1016 may be configured as or otherwise support a means for transmitting the adjusted sub-chunk sizes over the plurality of QPs according to the computed scheduler weights.

The output module 1008 may manage output signals for the apparatus 1002. For example, the output module 1008 may receive signals from other components of the apparatus 1002, such as the dynamic load-balancing component 1006, and may transmit these signals to other components or devices. In some specific examples, the output module 1008 may transmit output signals for display in a user interface, for storage in a database or data store, for further processing at a server or server cluster, or for any other processes at any number of devices or systems. In some cases, the output module 1008 may be a component of an I/O controller 1206 as described with reference to FIG. 10.

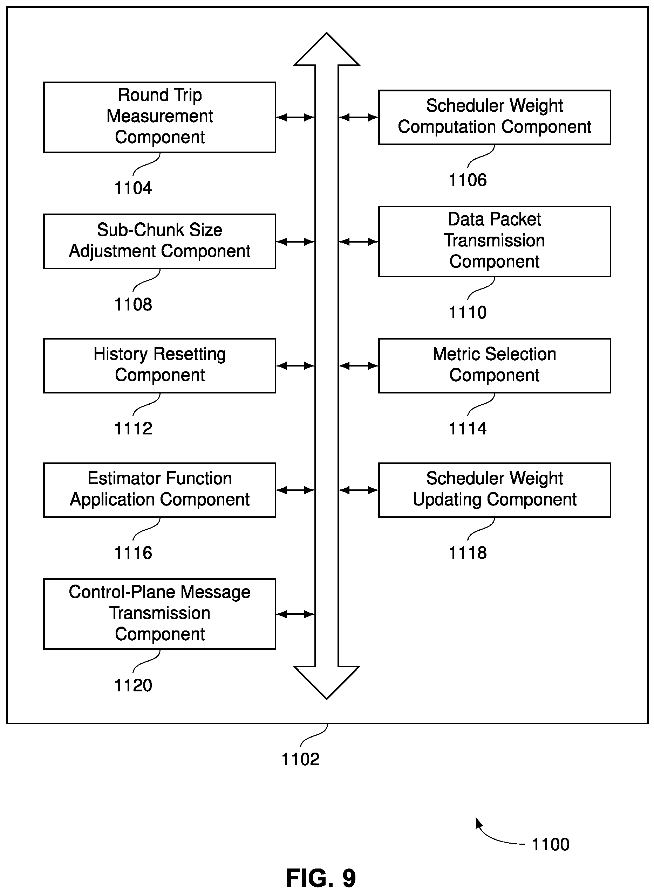

FIG. 9 shows a block diagram 1100 of a dynamic load-balancing component 1102 that supports dynamic load balancing of network traffic based on round trip time measurements in accordance with various aspects of the present disclosure. The dynamic load-balancing component 1102 may be an example of aspects of a dynamic load-balancing component 1006, a dynamic load-balancing component 1204, or both, as described herein. The dynamic load-balancing component 1102, or various components thereof, may be an example of means for performing various aspects of dynamic load balancing of network traffic based on round trip time measurements as described herein. For example, the dynamic load-balancing component 1102 may include one or more of a round trip measurement component 1104, a scheduler weight computation component 1106, a sub-chunk size adjustment component 1108, a data packet transmission component 1110, a history resetting component 1112, a metric selection component 1114, an estimator function application component 1116, a scheduler weight updating component 1118, a control-plane message transmission component 1120, and/or other components. Each of these components may communicate, directly or indirectly, with one another (e.g., via one or more buses).

The round trip measurement component 1104 may be configured as or otherwise support a means for measuring round trip time (RTT) for data packets transmitted over a plurality of queue pairs (QPs) in a network. In some implementations, the round trip measurement component 1104 may determine the RTT by recording the time a data packet is sent and the time an acknowledgment is received. The round trip measurement component 1104 may use these measurements to form weights for a weighted scheduler. The round trip measurement component 1104 may be configured to measure raw RTT, which may include the total round trip time without any adjustments. In some implementations, the round trip measurement component 1104 may subtract the transmission time of the message payload from the RTT to obtain a more accurate measurement. The round trip measurement component 1104 may apply an estimator function to filter the instantaneous metric values, which may result in a more stable estimate of network congestion. The round trip measurement component 1104 may use an average estimator, which may involve summing the metric values and dividing by the number of measurements. In some implementations, the round trip measurement component 1104 may reset the average history at a configured interval to increase responsiveness to changing network conditions. The round trip measurement component 1104 may use a weighted average estimator, which may respond more quickly to metric changes by applying a weight to the metric value. The round trip measurement component 1104 may use a TCP estimator, which may aggressively respond to metric changes by adjusting the estimate based on the difference between the metric value and the current estimate.

The scheduler weight computation component 1106 may be configured as or otherwise support a means for computing scheduler weights for the plurality of QPs based on the measured RTT, the scheduler weights may indicate levels of network congestion. In some implementations, the scheduler weight computation component 1106 may determine the weights by inverting the RTT estimates, so that higher RTT values result in lower weights. The scheduler weight computation component 1106 may periodically refresh the weights at a configured interval to reflect the most recent network conditions. In some implementations, the scheduler weight computation component 1106 may use a weighted average of the RTT measurements to compute the weights, which may allow for quicker adjustments to changing network conditions. The scheduler weight computation component 1106 may apply a normalization step to ensure that the sum of all weights equals one, which may help in distributing the traffic proportionally across the QPs.

The sub-chunk size adjustment component 1108 may be configured as or otherwise support a means for adjusting sub-chunk sizes of data packets to be transmitted over the plurality of QPs based on the computed scheduler weights. In some implementations, the sub-chunk size adjustment component 1108 may determine the sub-chunk sizes by rounding them down to the nearest multiple of a predefined byte value, such as 128 bytes. In some implementations, the sub-chunk size adjustment component 1108 may enforce a threshold that constrains the minimum sub-chunk size to avoid excessive division of the transmit request chunk size. In some implementations, the sub-chunk size adjustment component 1108 may allocate the remainder of the transmit request chunk size to the QP with the highest scheduler weight after rounding down other sub-chunk sizes.

The data packet transmission component 1110 may be configured as or otherwise support a means for transmitting the adjusted sub-chunk sizes over the plurality of QPs according to the computed scheduler weights. In some implementations, the data packet transmission component 1110 may transmit sub-chunk sizes that have been rounded down to the nearest multiple of 128 bytes. In some implementations, the data packet transmission component 1110 may allocate the remainder of the transmit request chunk size to the QP with the highest scheduler weight. In some implementations, the data packet transmission component 1110 may enforce a threshold that constrains the minimum sub-chunk size to avoid excessive division of the transmit request chunk size.

In some examples, the history resetting component 1112 may be configured as or otherwise support a means for resetting the history of the average round trip time measurements at a configured interval to increase responsiveness to changing network conditions. In some implementations, the history resetting component 1112 may reset the average history every minute to reflect recent network conditions. In some implementations, the history resetting component 1112 may use a shorter interval, such as 30 seconds, to adapt more quickly to network changes. In some implementations, the history resetting component 1112 may allow for configurable intervals, enabling adjustments based on specific network requirements.

In some examples, the metric selection component 1114 may be configured as or otherwise support a means for selecting a metric for the round trip time measurements from a group consisting of raw round trip time, round trip time minus transmission time of message payload, and round trip time minus transmission time of message payload and minimum latency for the network. In some implementations, the metric selection component 1114 may determine raw round trip time by recording the time a data packet is sent and the time an acknowledgment is received without subtracting any additional values. In some implementations, the metric selection component 1114 may determine round trip time minus transmission time of message payload by subtracting the time required to transmit the message payload from the total round trip time measurement. In some implementations, the metric selection component 1114 may determine round trip time minus transmission time of message payload and minimum latency for the network by subtracting both the transmission time of the message payload and the minimum latency associated with the network from the total round trip time measurement.

In some examples, the estimator function application component 1116 may be configured as or otherwise support a means for applying an estimator function to the round trip time measurements to filter instantaneous metric values and form a more stable estimate of network congestion. In some implementations, the estimator function application component 1116 may use an average estimator to smooth out fluctuations in the round trip time measurements. In some implementations, the estimator function application component 1116 may apply a weighted average estimator to give more importance to recent measurements. In some implementations, the estimator function application component 1116 may use a TCP estimator to aggressively respond to changes in the round trip time measurements.

In some examples, the scheduler weight updating component 1118 may be configured as or otherwise support a means for updating the scheduler weights at a configured update interval to reflect current network conditions. In some implementations, the scheduler weight updating component 1118 may determine the update interval based on the specific requirements of the network environment. In some implementations, the scheduler weight updating component 1118 may adjust the update interval dynamically in response to observed changes in network traffic patterns. In some implementations, the scheduler weight updating component 1118 may use historical data to predict the optimal update interval for maintaining accurate scheduler weights.

In some examples, the control-plane message transmission component 1120 may be configured as or otherwise support a means for transmitting control-plane messages over the queue pair experiencing the least network congestion based on the computed scheduler weights. In some implementations, the control-plane message transmission component 1120 may determine the queue pair experiencing the least congestion by analyzing the round trip time estimates associated with each queue pair. In some implementations, the control-plane message transmission component 1120 may transmit Clear To Send (CTS) messages over the queue pair with the highest scheduler weight to expedite communication between endpoints. In some implementations, the control-plane message transmission component 1120 may prioritize control-plane messages by assigning them to queue pairs with stable round trip time metrics to reduce latency fluctuations.

FIG. 10 shows a diagram of a system 1200 including a device 1202 that supports dynamic load balancing of network traffic based on round trip time measurements in accordance with aspects of the present disclosure. The device 1202 may be an example of or include the components of a database server or an apparatus 1002 as described herein. The device 1202 may include components for bi-directional data communications including components for transmitting and receiving communications, including a dynamic load-balancing component 1204, an I/O controller 1206, a database controller 1208, memory 1210, a processor 1212, and a database 1214. These components may be in electronic communication via one or more buses (e.g., bus 1216).

The dynamic load-balancing component 1204 may be an example of a dynamic load-balancing component 1006 or 1102 as described herein. For example, the dynamic load-balancing component 1204 may perform any of the methods or processes described above with reference to FIGS. 10 and 11. In some cases, the dynamic load-balancing component 1204 may be implemented in hardware, software executed by a processor, firmware, or any combination thereof.

The I/O controller 1206 may manage input signals 1218 and output signals 1220 for the device 1202. The I/O controller 1206 may also manage peripherals not integrated into the device 1202. In some cases, the I/O controller 1206 may represent a physical connection or port to an external peripheral. In some cases, the I/O controller 1206 may utilize an operating system such as iOS^{®}, ANDROID^{®}, MS-DOS^{®}, MS-WINDOWS^{®}, OS/2^{®}, UNIX^{®}, LINUX^{®}, or another known operating system. In other cases, the I/O controller 1206 may represent or interact with a modem, a keyboard, a mouse, a touchscreen, or a similar device. In some cases, the I/O controller 1206 may be implemented as part of a processor. In some cases, a user may interact with the device 1202 via the I/O controller 1206 or via hardware components controlled by the I/O controller 1206.

The database controller 1208 may manage data storage and processing in a database 1214. In some cases, a user may interact with the database controller 1208. In other cases, the database controller 1208 may operate automatically without user interaction. The database 1214 may be an example of a single database, a distributed database, multiple distributed databases, a data store, a data lake, or an emergency backup database.

Memory 1210 may include random-access memory (RAM) and read-only memory (ROM). The memory 1210 may store computer-readable, computer-executable software including instructions that, when executed, cause the processor to perform various functions described herein. In some cases, the memory 1210 may contain, among other things, a basic input/output system (BIOS) which may control basic hardware or software operation such as the interaction with peripheral components or devices.

The processor 1212 may include an intelligent hardware device, (e.g., a general-purpose processor, a DSP, a central processing unit (CPU), a microcontroller, an ASIC, an FPGA, a programmable logic device, a discrete gate or transistor logic component, a discrete hardware component, or any combination thereof). In some cases, the processor 1212 may be configured to operate a memory array using a memory controller. In other cases, a memory controller may be integrated into the processor 1212. The processor 1212 may be configured to execute computer-readable instructions stored in a memory 1210 to perform various functions (e.g., functions or tasks supporting dynamic load balancing of network traffic based on round trip time measurements).

FIG. 11 shows a flowchart illustrating a method 1300 that supports dynamic load balancing of network traffic based on round trip time measurements in accordance with various aspects of the present disclosure. The operations of the method 1300 may be implemented by one or more components of a networked computing system as described herein. For example, the operations of the method 1300 may be performed by a dynamic load-balancing component as described with reference to FIGS. 10 through 12. In some examples, one or more components of a networked computing system may execute a set of instructions to control the functional elements of the component(s) to perform the described functions. Additionally or alternatively, the one or more components of a networked computing system may perform aspects of the described functions using special-purpose hardware.

At 1302, the method 1300 may include measuring round trip time (RTT) for data packets transmitted over a plurality of queue pairs (QPs) in a network. The operations of 1302 may be performed in accordance with examples as disclosed herein. In some examples, aspects of the operations of 1302 may be performed by a round trip measurement component 1104 as described with reference to FIG. 9.

At 1304, the method 1300 may include computing scheduler weights for the plurality of QPs based on the measured RTT, the scheduler weights indicating levels of network congestion. The operations of 1304 may be performed in accordance with examples as disclosed herein. In some examples, aspects of the operations of 1304 may be performed by a scheduler weight computation component 1106 as described with reference to FIG. 9.

At 1306, the method 1300 may include adjusting sub-chunk sizes of data packets to be transmitted over the plurality of QPs based on the computed scheduler weights. The operations of 1306 may be performed in accordance with examples as disclosed herein. In some examples, aspects of the operations of 1306 may be performed by a sub-chunk size adjustment component 1108 as described with reference to FIG. 9.

At 1308, the method 1300 may include transmitting the adjusted sub-chunk sizes over the plurality of QPs according to the computed scheduler weights. The operations of 1308 may be performed in accordance with examples as disclosed herein. In some examples, aspects of the operations of 1308 may be performed by a data packet transmission component 1110 as described with reference to FIG. 9.

FIG. 12 illustrates a QP scheduler selection flowchart 1400 that supports techniques for load balancing RDMA traffic with dynamic queue pair scheduling based on RTT in accordance with various aspects of the present disclosure. Operations illustrated in the QP scheduler flowchart 1400 may involve a QP weighted round robin load balance scheduler, an enhanced QP stripe load balance scheduler, and a QP stripe load balance scheduler, which may be examples of corresponding devices described herein. The QP scheduler flowchart 1400 may describe a process for dynamically selecting a load balancing technique based on the number of queue pairs used and their availability. Table 1 shows the QP load balance scheduler selection criteria.

**Table 1**

| **Scheduler Selected** | **Selection Criteria** |
|---|---|
| QP Stripe Load Balance Scheduler | Number of QPs Used = Number of QPs Available |
| Enhanced QP Stripe Load Balance Scheduler | (Number of QPs Used != Number of QPs Available) AND (Number of QPs Used != 1) |
| QP Weighted Round Robin Load Balance Scheduler | Number of QPs Used = 1 |

At 1402, a server (e.g., the server 102-c) may determine, via processing circuitry, the number of QPs used for a transmit request. In some implementations, the server may measure the round trip time (RTT) for data packets transmitted over the plurality of QPs. The server may compute scheduler weights based on the measured RTT to indicate levels of network congestion. The server may adjust sub-chunk sizes of data packets based on the computed scheduler weights. The server may transmit the adjusted sub-chunk sizes over the plurality of QPs according to the computed scheduler weights.

At 1404, the server may determine if the number of QPs used is equal to the number of QPs available. In some implementations, the server may compare the number of QPs used for a transmit request with the total number of QPs available. The server may use this comparison to decide the appropriate load balancing technique. The server may dynamically select the load balancing technique based on this determination.

At 1406, the QP stripe load balance scheduler may be used if the number of QPs used is equal to the number of QPs available. The QP stripe load balance scheduler may use the computed scheduler weights to determine the sub-chunk sizes for each QP. The QP stripe load balance scheduler may periodically update the sub-chunk sizes based on new scheduler weights.

At 1408, the server may determine if the number of QPs used is not equal to the number of QPs available and if the number QPs used is also not equal to 1. In some implementations, the server may check if the number of QPs used differs from the number of QPs available. The server may also verify that the number of QPs used is not equal to one. The server may use this information to decide the appropriate load balancing technique. The server may dynamically select the load balancing technique based on this determination.

At 1410, the enhanced QP stripe load balance scheduler may be used if the number of QPs used is not equal to the number of QPs available and not equal to 1. In some implementations, the enhanced QP stripe load balance scheduler may distribute the data packets across the available QPs based on the computed scheduler weights. The enhanced QP stripe load balance scheduler may ensure that each QP handles a portion of the data packets proportional to its weight. The enhanced QP stripe load balance scheduler may use a threshold to constrain the minimum sub-chunk size. The enhanced QP stripe load balance scheduler may periodically update the sub-chunk sizes based on new scheduler weights.

At 1412, the server may determine if the number of QPs used is equal to 1. In some implementations, the server may check if only one QP is used for a transmit request. The server may use this information to decide the appropriate load balancing technique. The server may dynamically select the load balancing technique based on this determination. The server may ensure efficient transmission of data packets even when only one QP is used. In other words, the QP weighted round robin load balance scheduler can be a fall back option when only one QP is needed for the transmit request.

At 1414, the QP weighted round robin load balance scheduler may be used if the number of QPs used is equal to 1. In some implementations, the QP weighted round robin load balance scheduler may handle the entire transmit request using a single QP. The QP weighted round robin load balance scheduler may ensure that the single QP handles the data packets efficiently.

It should be noted that the methods described herein describe possible implementations, and that the operations and the steps may be rearranged or otherwise modified and that other implementations are possible. Furthermore, aspects from two or more of the methods may be combined.

Aspect 1: A method for dynamic load balancing of network traffic based on round trip time measurements, comprising: measuring round trip time (RTT) for data packets transmitted over a plurality of queue pairs (QPs) in a network; computing scheduler weights for the plurality of QPs based on the measured RTT, the scheduler weights indicating levels of network congestion; adjusting sub-chunk sizes of data packets to be transmitted over the plurality of QPs based on the computed scheduler weights; and transmitting the adjusted sub-chunk sizes over the plurality of QPs according to the computed scheduler weights.

Aspect 2: The method of aspect 1, further comprising resetting the history of the average round trip time measurements at a configured interval to increase responsiveness to changing network conditions.

Aspect 3: The method of any of aspects 1 through 2, further comprising selecting a metric for the round trip time measurements from a group consisting of raw round trip time, round trip time minus transmission time of message payload, and round trip time minus transmission time of message payload and minimum latency for the network.

Aspect 4: The method of any of aspects 1 through 3, further comprising applying an estimator function to the round trip time measurements to filter instantaneous metric values and form a more stable estimate of network congestion.

Aspect 5: The method of any of aspects 1 through 4, further comprising updating the scheduler weights at a configured update interval to reflect current network conditions.

Aspect 6: The method of any of aspects 1 through 5, further comprising transmitting control-plane messages over the queue pair experiencing the least network congestion based on the computed scheduler weights.

Aspect 7: The method of any of aspects 1 through 6, wherein the sub-chunk sizes are adjusted to avoid exceeding a threshold that constrains the minimum sub-chunk size.

Aspect 8: The method of any of aspects 1 through 7, wherein the scheduler weights are computed by inverting the estimates of network congestion and forming a relative ratio.

Aspect 9: The method of any of aspects 1 through 8, wherein the round trip time measurements are made by network interface card hardware to reduce measurement jitter.

Aspect 10: The method of any of aspects 1 through 9, wherein the estimator function is selected from a group consisting of average, weighted average, and TCP estimator.

Aspect 11: The method of any of aspects 1 through 10, wherein the scheduler weights are computed by inverting the estimates of network congestion and forming a relative ratio.

Aspect 12: The method of any of aspects 1 through 11, further comprising selecting a load balancing scheduler based on a number of QPs used for a transmit request and a number of QPs available.

Aspect 13: The method of any of aspects 1 through 12, further comprising in a case that the number of QPs used is equal to the number of QPs available, selecting QP stripe load balance scheduling, in a case that the number of QPs used is not equal to the number of QPs available and the number of QPs used is not equal to one, selecting enhanced QP stripe load balance scheduling, and in a case that the number of QPs used is equal to 1, selecting QP weighted road robin load balance scheduling.

Aspect 14: The method of any of aspects 1 through 13, further comprising refreshing the scheduler weights in response to detecting changes in network conditions greater than a predetermined threshold.

Aspect 15: A system for dynamic load balancing of network traffic based on round trip time measurements, comprising a processor; memory coupled with the processor; and instructions stored in the memory and executable by the processor to cause the system to perform a method of any of aspects 1 through 10.

Aspect 16: A system for dynamic load balancing of network traffic based on round trip time measurements, comprising at least one means for performing a method of any of aspects 1 through 10.

Aspect 17: A non-transitory computer-readable medium storing code for dynamic load balancing of network traffic based on round trip time measurements, the code comprising instructions executable by a processor to perform a method of any of aspects 1 through 10.

Aspect 18: A system for dynamic load balancing of network traffic, comprising: processing circuitry configured to determine network congestion based on round trip time (RTT) measurements, determine weights for each of a plurality of queue pairs based on the network congestion, allocate a percentage of transmit requests across each of the plurality of queue pairs based on the determined weights, and send a transmit request from a plurality of transmit requests on one of the queue pairs, wherein that queue pair was selected based on the determined weights.

The description set forth herein, in connection with the appended drawings, describes example configurations and does not represent all the examples that may be implemented or that are within the scope of the claims. The term "exemplary" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and devices are shown in block diagram form in order to avoid obscuring the concepts of the described examples.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label.

Information and signals described herein may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a DSP, an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein can be implemented using software executed by a processor, hardware, firmware, hardwiring, or combinations of any of these. Features implementing functions may also be physically located at various positions, including being distributed such that portions of functions are implemented at different physical locations. Also, as used herein, including in the claims, "or" as used in a list of items (for example, a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an exemplary step that is described as "based on condition A" may be based on both a condition A and a condition B without departing from the scope of the present disclosure. In other words, as used herein, the phrase "based on" shall be construed in the same manner as the phrase "based at least in part on."

Computer-readable media includes both non-transitory computer storage media and communication media including any medium that facilitates transfer of a computer program from one place to another. A non-transitory storage medium may be any available medium that can be accessed by a general purpose or special purpose computer. By way of example, and not limitation, non-transitory computer-readable media can comprise RAM, ROM, electrically erasable programmable read only memory (EEPROM), compact disk (CD) ROM or other optical disk storage, magnetic disk storage or other magnetic storage devices, or any other non-transitory medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

The description herein is provided to enable a person skilled in the art to make or use the disclosure. Various modifications to the disclosure will be readily apparent to those skilled in the art, and the generic principles defined herein may be applied to other variations without departing from the scope of the disclosure. Thus, the disclosure is not limited to the examples and designs described herein, but is to be accorded the broadest scope consistent with the principles and novel features disclosed herein.

## Claims

1. A method comprising
measuring round trip time, RTT, for data packets transmitted over a plurality of queue pairs, QPs, in a network;
computing scheduler weights for the plurality of QPs based on the measured RTT, the scheduler weights indicating levels of network congestion;
adjusting sub-chunk sizes of data packets or an amount of network traffic to be transmitted over the plurality of QPs based on the computed scheduler weights; and
transmitting the adjusted sub-chunk sizes or the amount of network traffic over the plurality of QPs according to the computed scheduler weights.

2. The method of claim 1, further comprising
resetting a history of an average of the round trip time measurements at a configured interval.

3. The method of claim 1 or 2, further comprising
selecting a metric for the round trip time measurements from a group including raw round trip time, round trip time minus transmission time of message payload, and round trip time minus transmission time of message payload and minimum latency for the network.

4. The method of any one of the claims 1 to 3, further comprising
applying an estimator function to the round trip time measurements to filter instantaneous metric values, wherein the estimator function increases a stability of an estimate of network congestion.

5. The method of any one of the claims 1 to 4, further comprising
updating the scheduler weights at a configured update interval to reflect current network conditions.

6. The method of claim 5, further comprising
refreshing the scheduler weights in response to detecting changes in network conditions greater than a predetermined threshold.

7. The method of any one of the claims 1 to 6, further comprising
transmitting control-plane messages over the queue pair experiencing the least network congestion based on the computed scheduler weights.

8. The method of any one of the claims 1 to 7, wherein
the sub-chunk sizes are adjusted to avoid exceeding a threshold that constrains a minimum sub-chunk size.

9. The method of any one of the claims 1 to 8, wherein
the computed scheduler weight for a QP corresponds to a percentage of the network traffic to be sent over that QP.

10. The method of any one of the claims 1 to 9, wherein
the round trip time measurements are made by network interface card hardware to reduce measurement jitter.

11. The method of any one of the claims 1 to 10, wherein
the scheduler weights are computed by inverting the estimates of network congestion and forming a relative ratio.

12. The method of any one of the claims 1 to 11, further comprising
selecting a load balancing scheduler based on a number of QPs used for a transmit request and a number of QPs available.

13. The method of claim 12, further comprising
in a case that the number of QPs used is equal to the number of QPs available, selecting a first load balancing scheduler,
in a case that the number of QPs used is not equal to the number of QPs available and the number of QPs used is not equal to one, selecting a second load balance scheduler different from the first load balance scheduler, and
in a case that the number of QPs used is equal to 1, selecting a third load balancing scheduler different from the first and second load balancing schedulers.

14. An apparatus, comprising:
processing circuitry configured to control and/or carry out a method as set forth in any one of the preceding claims 1 to 13.

15. A non-transitory computer-readable medium storing code thereon, the code comprising instructions executable by a processor to perform a method as set forth in any one of the preceding claims 1 to 13.
